# FASCICULE DE BREVET EUROPEEN

(11) **EP 2 279 941 B1**
(45) Date de publication et mention de la délivrance du brevet: **04.01.2012**
(21) Numéro de dépôt: 10006709.9
(22) Date de dépôt: 29.06.2010
(51) Int. Cl.: B64C 13/46, B64C 27/26

(54) **Amortissement variable de restitution haptique pour chaine cinématique de changement d'attitude de vol d'un aéronef**
Variable Dämpfung der haptischen Rückkopplung für die Bewegungsübertragung bei Änderung der Fluglage eines Luftfahrzeugs
Variable damping of haptic feedback for kinematic linkage to change the flight attitude of an aircraft

(30) Priorité: 28.07.2009 FR 0903690
(43) Date de publication de la demande: 02.02.2011
(73) Titulaire: EUROCOPTER, 13725 Marignane Cédex (FR)
(72) Inventeur: Biest, Romuald, 13290 Les Milles (FR); Gemmati, Bernard, 84360 Lauris (FR); Pruss, Julien, 13090 Aix en Provence (FR)
(74) Mandataire: Pouillot, Laurent Pierre Paul

(56) Documents cités:
- EP-A2- 1 348 622
- FR-A1- 2 916 420
- US-A- 3 385 537
- US-A- 3 765 624

## Description

La présente invention vise un amortissement à coefficient variable d'une restitution haptique dans une commande de vol manuelle agissant sur une chaîne cinématique de changement d'attitude de vol d'un aéronef.

Dans les exemples, l'invention est décrite dans le cas d'une commande de pas cyclique des pales d'une voilure tournante d'un hélicoptère de type dit hybride.

Un hélicoptère hybride est un concept avancé d'aéronef à décollage et à atterrissage verticaux, désigné « VTOL Aircraft » pour « Vertical Take-Off and Landing Aircraft » en langue anglaise. Des exemples de réalisation d'un tel hélicoptère hybride sont par exemple décrits dans les documents FR 2 916 418, FR 2 916 419 et FR 2 916 420 qui est considéré comme l'art antérieur le plus proche.

Cet hélicoptère hybride allie à un coût raisonnable l'efficacité du vol vertical de l'hélicoptère conventionnel aux performances à grande vitesse sur trajectoire longitudinale, par exemple jusqu'à une vitesse d'avancement en croisière de l'ordre de 400 km/h, voire d'avantage, mais également à une grande distance franchissable.

D'un point de vue structurel, un hélicoptère hybride est remarquable notamment par trois aspects.

Ainsi, en vol d'avancement sur trajectoire, une partie de la portance d'un hélicoptère hybride est assurée par une voilure tournante sous forme d'au moins un rotor principal, dont l'axe de rotation ou mât n'est pas basculant, à l'inverse de ceux d'un appareil convertible tel qu'un appareil Bell-Boeing V22 Osprey.

Ceci distingue l'hélicoptère hybride non seulement de tels appareils convertibles, mais également et par définition des aéronefs à voilure fixe. Un hélicoptère hybride est donc à considérer comme un aéronef à voilure tournante de nouvelle génération.

Par souci de simplicité, on désigne ci-après par voilure tournante le ou les rotors de sustentation d'un tel aéronef, et par disque rotor la surface géométrique définie par un tel rotor.

Cependant, un hélicoptère hybride comporte en plus de sa voilure tournante, une voilure dite fixe par exemple sous la forme de deux demi-ailes étendues transversalement de part et d'autre d'un fuselage.

Cette voilure fixe assure une partie de la portance en vol d'avancement, d'autant plus importante que la vitesse longitudinale de l'hélicoptère hybride est élevée.

De part et d'autre et à distance transversalement du fuselage, il est prévu pour ce faire, au moins un agencement de propulsion typiquement sous forme d'au moins une hélice de poussée. Au moins un groupe de motorisation tel qu'un turbomoteur entraîne en rotation simultanément la voilure tournante, typiquement un rotor principal, ainsi que les agencements de propulsion.

En outre, les agencements de propulsion produisent un couple de stabilisation longitudinale, du fait de leur fonctionnement qui est à poussée différentielle. Cet hélicoptère hybride peut ainsi être dénué de rotor anti-couple.

Toutefois, un hélicoptère hybride est pourvu de surfaces aérodynamiques de stabilisation et de manoeuvre de type empennages et gouvernes.

Un autre aspect distinctif de l'hélicoptère hybride est qu'une chaîne cinématique de changement d'attitude en vol, proportionnelle à rapports constants en termes de vitesses de rotation relie la voilure tournante, les groupes de motorisation et donc des agencements de propulsion.

Ceci différencie l'hélicoptère hybride d'un autogire tel que celui de La Cierva, d'un hélicoptère combiné tel que le SO10 Farfadet, ou encore d'un girodyne tel que le Jet Rotodyne de Fairey, le rotor principal de tous ces appareils étant en autorotation sous l'effet de la vitesse d'avancement pour les vols sur trajectoire.

En modifiant collectivement et d'une même quantité le pas des pales des hélices des agencements de propulsion, il est en outre possible de contrôler la poussée d'avancement de cet l'hélicoptère hybride, qui est générée par ces agencements.

Cependant, du fait des vitesses d'avancement élevées que peut atteindre un hélicoptère hybride, celui-ci est soumis à un risque accru d'autocabrage ou en langue anglaise « pitch-up », comportement qui est expliqué par la suite.

Le domaine technique de l'invention est donc le domaine technique restreint des commandes de vol d'un hélicoptère hybride.

Dans ce domaine, le document FR 2 476 013 décrit un dispositif pour permettre un déplacement important d'une gouverne à faible vitesse de vol et restreindre ce déplacement à une vitesse importante. A cette fin, un organe de réglage limite le déplacement d'un moyen de commande, apte à être mis en mouvement par un pilote, en fonction d'un signal dérivé d'une pression dynamique.

Le document FR 1 132 452 décrit également un dispositif de restriction du déplacement d'une gouverne à vitesse importante. Ce document prévoit de limiter, en fonction de la vitesse d'avancement de l'aéronef, les effets du déplacement d'un moyen de commande sur une gouverne, un déplacement identique du moyen de commande induisant des déplacements différents de la gouverne en fonction de ladite vitesse d'avancement.

Bien qu'intéressantes, ces solutions semblent peu adaptées au contexte très particulier d'un hélicoptère hybride.

On peut également citer le document EP 1 918 196 qui décrit un système, pour avion de ligne, de manche de pilotage à réaction de pondération d'effort ou restitution haptique (« Haptic Feedback » en langue anglaise).

Plus la vitesse de l'avion augmente et plus est accrue la réaction, depuis une position donnée du manche et des surfaces aérodynamiques de l'avion associées à ce manche.

Ces surfaces aérodynamiques sont des volets articulés sur les ailes de la voilure fixe de l'avion. Divers facteurs influant sur cette réaction sont pris en considération dont le taux de mouvement du manche, la capacité de taux de manoeuvre (en langue anglaise « Slew Rate Capacity ») des surfaces aérodynamiques ainsi que la capacité de charge de ces surfaces.

Une unité de commande de vol est couplée à une motorisation par un circuit de commande, pour fournir au moins un signal de déclenchement de force de réaction, afin de définir la capacité de taux de manoeuvre des surfaces aérodynamiques de l'avion.

Le document EP 0 384 806 décrit également un dispositif pour la commande d'éléments d'une machine volante, comportant un manche monté basculant autour d'au moins un axe transversal. Ce manche est associé à au moins un capteur de position délivrant un signal électrique représentatif du basculement dudit manche autour dudit axe. Ce signal électrique contrôle au moins l'un desdits éléments de la machine par l'intermédiaire de moyens de calcul. Le dispositif comporte au moins un moteur couple associé audit axe pour entraîner une rotation relative entre le rotor et le stator dudit moteur couple, en fonction de moyens de calcul.

Le document US 3 765 624 décrit un système de restitution artificielle d'efforts qui est indépendant de la position de vérins d'actionnement dits de "TRIM". Ce système génère des forces opposées au déplacement de commandes, qui dépendent des accélérations linéaires et angulaires de l'aéronef, ainsi que du nombre de Mach. Un dispositif de secours à masse inertielle, ressort et amortisseur est prévu pour s'opposer également au déplacement de commandes, par exemple par manipulation d'un manche.

Le document WO 2006 / 137 908 décrit une commande mécanique de vol ou "Mechanical Flight Control System" (MFCS), dédiée à un ajustement cyclique du pas des pales d'un rotor principal, dite "Cyclic Control System" (CSS) d'aéronef à voilure tournante. Un système de pilotage automatique appelé "Automatic Flight Control System" (AFCS) incorpore cet ajustement cyclique. Cette commande mécanique présente une portion amont, une portion aval et des moyens d'amplification agencés pour connecter ces parties amont et aval.

Des actionneurs concentriques à valves ainsi que divers paramètres de limitation de charge sont décrits. Ce document porte sur des lois d'effort ou d'amortissement, à gain constant, c'est-à-dire fixe.

Le document WO 2008 / 052 094 décrit une interface homme-machine active, qui est implémentée sans détecteur de force, mais avec un détecteur de position neutre et la production d'un signal représentatif de cette position. Ce document tente ainsi de restituer au pilote une sensation lui indiquant les sollicitations appliquées à un moment donné, sur des organes qu'il pilote.

Divers types de capteurs sont mentionnés, soit analogiques soit numériques, tels que les capteurs à effet Hall, des capteurs optiques, des capteurs de transformation différentielle variable de rotation (Rotary Variable Differential Transformer ou RVDT en langue anglaise).

Le document EP 1 348 622 décrit un dispositif de commande pour gouverne d'aéronef comprenant un amortisseur à résistance variable.

Ce document EP 1 348 622 décrit des commandes de surfaces de contrôle de vol, de type actives au sens où un amortisseur à résistance variable réduit l'autorité du pilote quand la fréquence d'application de déplacements de contrôle de vol par ce pilote augmente. Cet amortisseur comporte un moteur d'amortissement. Ce document ne décrit pas un hélicoptère hybride. Il ne prévoit pas non plus une loi d'effort d'amortissement prédéterminée en fonction d'un facteur de charge instantané de l'appareil à commander.

Ces documents étant mentionnés, il est maintenant plus aisé d'exposer les divers problèmes techniques à la base de l'invention.

De ce qui précède, on comprend que du fait notamment des vitesses d'avancement d'un hélicoptère hybride, supérieures à celles d'un aéronef à voilure tournante usuel, ainsi que de la relative complexité des équilibrages fonctionnels à prévoir pour l'optimisation en vol d'un tel appareil, il a été préféré de doter certaines commandes des hélicoptères hybrides de mécanismes d'assistance en puissance.

Ces mécanismes d'assistance ajustent l'état de surfaces aérodynamiques telles que rotors, hélices, gouvernes ou empennages en fonction de signaux de commande. Selon les cas, ces mécanismes d'assistance ont des sources de puissance en général de type hydraulique comme pour les servocommandes, tandis que pour la commande du pilote automatique ce sont des vérins électriques qui interviennent le plus souvent.

Les signaux de commande sont générés soit par des actions de l'être humain qui pilote l'hélicoptère hybride, soit par un pilote automatique, soit sont formés à partir d'une combinaison de signaux d'origine humaine et automatique.

Un inconvénient connu des commandes assistées en puissance de type au moins partiellement manuelles, est qu'elles ne restituent pas au niveau de l'organe de commande manoeuvré par le pilote, les efforts appliqués à un instant donné sur les surfaces aérodynamiques. Selon les cas, les organes de commande manuelle de vol sont des leviers, manches, boutons, etc.

Dans le cas d'un hélicoptère hybride de tels organes de commandes sont en général disposés dans le poste de pilotage de l'appareil.

Dans ces conditions, l'ajustement du pas cyclique des pales de la voilure tournante est usuellement conçu pour que le manche cyclique reste ancré dans une position d'équilibre compensé dite « neutre», sans intervention du pilote.

Quand ce manche cyclique est dans cette position neutre, l'ajustement cyclique du rotor principal par un système de commande cyclique dit "Cyclic Control System" (CCS) définit une nouvelle position d'équilibre de commande de l'appareil.

Les caractéristiques mécaniques principales d'un système CCS relèvent des efforts ou forces perçues par le pilote à travers le manche cyclique pendant les manoeuvres de ce dernier.

Typiquement, les forces caractéristiques qui sont relatives à un ajustement de type CCS dans un hélicoptère standard à commandes de vol mécaniques, sont réductibles:
- aux forces d'ancrage, qui sont appliquées pour recentrer le manche à sa position neutre de "TRIM", ces forces étant constantes quelle que soit l'amplitude ou la rapidité de déplacement du manche cyclique ;
- aux forces de recentrage auxiliaires du manche cyclique vers sa position neutre, celles-ci étant proportionnelles au déplacement du manche par rapport à la position neutre ;
- à la force de friction constante opposée aux déplacements du manche ;
- à la force proportionnelle à la rapidité de déplacement du manche, afin de pallier aux manoeuvre brutales ; et
- à la force d'arrêt apte à stopper le déplacement à une position établie en fonction de limites des conditions de vol et matérialisée par une sorte de butée normalement escamotée.

Un système de pilotage automatique permet d'agir sur la commande dite ici manche cyclique, en réglant automatiquement la position neutre. Il est courant d'inclure dans le poste de pilotage, qu'il soit à bord ou hors bord, un organe de relâchement de position neutre (« TRIM release » en langue anglaise), typiquement disposé sur la poignée du manche cyclique. Ce bouton permet au pilote de déplacer le manche jusqu'à n'importe quelle position et de demander au pilote automatique de maintenir cette nouvelle position une fois ledit bouton relâché.

Souvent également, un commutateur à cinq états dont un état central stable permet de modifier la position neutre, ou attitude de l'hélicoptère, dans les quatre directions cardinales. Classiquement aussi, il doit être possible que le pilote dirige l'hélicoptère sans débrayer les efforts évoqués.

On note que classiquement, le manche cyclique d'un hélicoptère permet de commander un tel aéronef en tangage et en roulis, théoriquement de manière indépendante, c'est-à-dire sans influence parasite d'une manoeuvre de tangage sur l'attitude de l'aéronef en roulis, et inversement.

En d'autres termes, une manoeuvre de tangage pur par le pilote est exclusivement transmise vers la voilure tournante par une chaîne cinématique de changement d'attitude en vol en tangage, sans influence au sein de la chaîne cinématique de changement d'attitude en vol en roulis qui est également manoeuvrée par le manche cyclique.

Similairement, une manoeuvre en roulis pur sur le manche cyclique n'agît pas sur la chaîne cinématique de changement d'attitude en vol en tangage.

Par ailleurs, il est rappelé qu'une manoeuvre quelconque du manche cyclique permet un changement d'attitude simultanément en tangage et en roulis d'un aéronef à voilure tournante.

Cependant, il est courant qu'en aval des deux chaînes cinématiques autonomes en tangage et roulis, directement issues du manche cyclique, des paramètres imposés pour le vol de l'aéronef provoquent des changements d'attitude en tangage, roulis, voire lacet, lors d'une manoeuvre du pilote sur ledit manche de commande en tangage ou roulis.

Ceci étant exposé, on comprend que les commandes manuelles assistées en puissance, telles que celles qui agissent sur les positions en tangage, lacet et roulis d'un aéronef, privent son pilote de naturellement ressentir les forces de réaction renvoyées par les surfaces aérodynamiques vers l'organe de commande correspondant.

Or, ces forces de réaction traduisent de façon tactilement sensible ou haptique diverses contraintes et sollicitations que l'aéronef subit. De fait, l'absence de sensation tactile par le pilote traduisant ces forces de réaction ne permet pas à celui-ci de percevoir un risque de mise en danger si les limites structurales ou fonctionnelles de l'appareil sont proches ou en train d'être dépassées.

Par ailleurs, les forces imposées aux surfaces aérodynamiques dans un hélicoptère hybride sont notamment fonction des conditions instantanées de son vol En particulier, intervient son facteur de charge et sa vitesse d'avancement sur trajectoire, qui est couramment appelée « vitesse air sur trajectoire », ou plus simplement « vitesse air» par la suite.

Le facteur de charge maximal toléré par un aéronef pendant un virage ou une ressource, est fonction de la vitesse instantanée de l'aéronef ainsi que du rayon de courbure de la trajectoire.

Ce rayon de courbure de la trajectoire en tangage, c'est-à-dire autour d'un axe étendu suivant une direction transversale, en piqué ou en cabré, est particulièrement pertinent pour la détermination d'un tel facteur de charge limite. Un constat semblable s'impose en roulis.

Afin de prévenir un cas de dépassement de facteur de charge limite, la commande de pas cyclique longitudinal devrait donc être munie d'une loi d'effort d'amortissement qui traduirait au mieux la proximité d'un tel facteur de charge limite.

On a vu qu'il est courant de produire une pareille loi d'effort d'amortissement à partir de la rapidité de déplacement de manoeuvre du dispositif de commande manuelle de vol correspondant par le pilote et / ou de la vitesse de l'aéronef.

Par ailleurs, il existe un lien entre les limites de facteur de charge et les risques d'autocabrage d'un aéronef à voilure tournante. Notons que classiquement, l'autocabrage prend deux formes.

Plus précisément, l'autocabrage peut être compris comme une instabilité longitudinale à partir d'une certaine incidence avec une possibilité de divergence à cabrer (variation d'assiette à cabrer), du fuselage ou cellule de l'aéronef.

Notamment, l'autocabrage apparaît lorsque l'angle de basculement de la voilure tournante vers l'arrière est trop important (angle de battement des pales trop important dans la zone avant du disque rotor). En effet, il s'avère dans ces conditions que les moments par rapport au centre de gravité de l'aéronef, des forces de gravité, de la portance ainsi que de la trainée, ne sont plus de sens opposés l'un à l'autre.

Outre la divergence de l'assiette de l'aéronef, un tel basculement excessif peut conduire à un taux de tangage en ressource qui a tendance à augmenter le facteur de charge de l'aéronef.

Si une commande de pas cyclique est actionnée à des fréquences basses, par exemple par des déplacements lents sur le dispositif de commande manuelle de vol, alors l'aéronef répond dans un mode quasiment statique, c'est-à-dire en variation d'assiette. De la sorte, il est possible de préserver un basculement suffisamment faible pour éviter l'autocabrage.

A l'inverse, si une commande sensible de vol, par exemple en tangage (voire en roulis), est actionnée à haute fréquence, c'est-à-dire en opérant un déplacement rapide de l'organe de commande manuelle, alors le fuselage n'a en quelque sorte pas le temps de suivre, et le basculement a tendance à s'accroître de façon significative, ce qui peut aboutir à des taux de tangage inacceptables, voire dangereux.

L'autocabrage a donc pour conséquence l'application à l'aéronef d'un facteur de charge excessif par rapport à ses limites en vol.

Or, ce phénomène est d'autant plus pénalisant voire périlleux que la vitesse de l'aéronef est élevée.

Afin de tenter de prévenir l'autocabrage, les déplacements du dispositif de commande manuelle de vol, en particulier de tangage, doivent être correctement amortis, par une force de restitution haptique au pilote, qui s'oppose à ces déplacements.

Mais des essais particuliers ont permis de déterminer que les solutions connues de restitution haptique ne permettent pas de pallier les problèmes exposés pour un hélicoptère hybride, en particulier lorsqu'il atteint des vitesses air de l'ordre de 400 km/h par exemple, voire plus.

Par ailleurs, ces essais ont permis de choisir des commandes sensibles sur lesquelles un effet haptique en retour de restitution d'effort adapté est particulièrement crucial, à savoir notamment les commandes de tangage et à moindre niveau de roulis et / ou de lacet.

Par ailleurs, le choix d'un amortissement approprié des déplacements des dispositifs de commande manuelle de vol, devrait pour un hélicoptère hybride garantir un pilotage plus précis et confortable.

Du fait d'un respect accru des limites de vol telles qu'imposées par le facteur de charge, la sécurité en vol d'un hélicoptère hybride devrait pouvoir être encore améliorée. Une autre conséquence escomptée serait certainement une longévité augmentée de l'hélicoptère hybride, du fait d'un endommagement moindre de ses constituants concernés.

De plus, il serait souhaitable pour une fiabilité accrue de l'hélicoptère hybride, que l'amortissement approprié des déplacements des dispositifs de commande manuelle de vol soit indépendant de fonctions similaires opérées par le pilote automatique.

A cet effet, l'invention est définie dans les revendications.

Suivant un objet de l'invention, un procédé de restitution haptique de manoeuvres d'au moins un dispositif de commande manuelle de vol apte à provoquer des ajustements du pas cyclique des pales d'une voilure tournante d'un hélicoptère hybride de destination, par l'intermédiaire d'une assistance en puissance.

Cet hélicoptère hybride de destination comporte au moins : un fuselage, ladite voilure tournante et une voilure fixe, deux agencements de propulsion à poussée différentielle anti-couple qui sont répartis symétriquement de part et d'autre du fuselage.

Ces agencements de propulsion sont contrôlés entre une valeur minimale de poussée (en principe nulle) et une valeur maximale, par un organe de contrôle manuel de la poussée. Cet hélicoptère hybride comportant en outre un pilote automatique apte à agir sur l'assistance en puissance d'ajustement du pas cyclique des pales de la voilure tournante, lesdites manoeuvres du dispositif de commande manuelle de vol sont amorties par des restitutions haptiques définies selon une loi d'effort d'amortissement prédéterminée.

Selon cet objet, ladite loi d'effort d'amortissement des manoeuvres du dispositif de commande manuelle est prédéterminée en fonction d'un facteur de charge instantané de l'hélicoptère hybride, de sorte que ce facteur de charge instantané soit maintenu entre ses valeurs limite minimale et limite maximale, proportionnellement à une position dudit organe de contrôle manuel de la poussée, entre les valeurs de poussée minimale et maximale.

Plus précisément, ladite loi d'effort d'amortissement prédéterminée correspond à l'introduction d'un couple résistant dû à un amortisseur par exemple rotatif intégré à la chaîne cinématique de changement d'attitude de vol, sur laquelle le pilote agît par l'intermédiaire du dispositif de commande manuelle de vol soumis aux restitutions haptiques.

Par exemple, ladite loi d'effort d'amortissement prédéterminée des manoeuvres dudit dispositif de commande manuelle est obtenue par l'application d'un couple résistant exercé par un amortisseur sur ladite chaîne cinématique de changement d'attitude, avec un coefficient d'amortissement dudit amortisseur qui lui-même est variable selon une autre loi dite « de variation du coefficient d'amortissement ».

Cette loi de variation du coefficient d'amortissement est quant à elle prédéterminée en fonction de la course de pas collectif moyen des pales d'hélices desdits agencements de propulsion.

Selon divers modes de réalisation, ledit dispositif de commande manuelle à amortissement de manoeuvres agit sur l'attitude en tangage et / ou roulis et / ou lacet, de l'hélicoptère hybride.

Alors, selon les cas, lesdites surfaces aérodynamiques font partie de la voilure tournante de l'aéronef -dont on pilote le pas cyclique- et / ou d'agencements de motorisation et / ou d'un ensemble de surfaces de stabilisation et de manoeuvre.

Quand ledit organe de contrôle manuel ordonne une poussée à ladite valeur minimale, voire nulle, le pas collectif desdites hélices des agencements de propulsion est minimal et ledit coefficient d'amortissement par l'amortisseur tel que défini selon ladite loi de variation du coefficient d'amortissement prédéterminée est sensiblement compris entre 2,5 et 3,5 Nm/rd/s. Dans un exemple de réalisation, on a mesuré un coefficient d'amortissement à poussée minimale de l'ordre de 3,18562 Nm/rd/s.

Ce coefficient d'amortissement par l'amortisseur obtenu quand ledit organe de contrôle ordonne une poussée à la valeur maximale, est dès lors maximal et sensiblement compris entre 13,5 et 14,5 Nm/rd/s. Dans un exemple de réalisation, on a mesuré un coefficient d'amortissement à poussée maximale de l'ordre de 14,3354 Nm/rd/s.

En effet, cette loi d'effort d'amortissement prédéterminée qui est exercée sur le dispositif de commande de vol, une tringlerie ou une bielle de la chaîne cinématique de changement d'attitude de vol soumise aux restitutions haptiques, par exemple, résulte bien d'une division dudit couple résistant par la distance séparant la tringlerie du point d'application du couple.

Dans ces conditions, le coefficient de résistance, ou coefficient d'amortissement est le couple qui résulte de l'application à la partie en rotation de l'amortisseur d'une vitesse de un (1) radian par seconde (noté ensuite : rd/s).

Selon une réalisation, l'amortisseur rotatif est en fait un alternateur qui débite un courant électrique dans un circuit électrique résistant branché à ses bornes, de manière à produire une force contrélectromotrice.

Selon une autre réalisation, ledit dispositif de commande manuelle à amortissement de manoeuvre agit sur le comportement en tangage de l'hélicoptère hybride.

Selon une réalisation, ledit dispositif de commande manuelle à amortissement de manoeuvre agit sur le comportement en roulis et / ou en lacet de l'hélicoptère hybride.

Selon une réalisation, ladite loi d'effort prédéterminée d'amortissement des manoeuvres du dispositif de commande manuelle de vol, correspond à un coefficient d'amortissement qui varie selon une loi de variation prédéterminée de façon linéaire entre 0% et 100% de la course des bielles (ou moyens similaires: plateau d'entraînement, ...) de pas collectif des pales des hélices. Cette course de pas collectif des pales des hélices est encore définie comme la commande collective de poussée (dit « paramètre TCL », c'est-à-dire « Thrust control Lever » en langue anglaise).

Par exemple, pour une poussée minimale et relative au paramètre TCL égale à 0%, c'est-à-dire à un pas collectif moyen minimal des pales des hélices, le coefficient d'amortissement est de l'ordre de 3,2 Nm/rd/s (pour Newton-mètre/radian/seconde). Pour une poussée maximale et relative du paramètre TCL égal à 100%, le coefficient d'amortissement est de l'ordre de 14,3 Nm/rd/s. Dans ce dernier cas, le pas collectif moyen des pales des hélices est maximal.

Les valeurs des coefficients d'amortissement précitées sont relatives, mais non exclusives, aux caractéristiques de l'amortisseur rotatif précédemment mentionné. La variation de ce coefficient correspond à une loi linéaire et prédéterminée, dite loi de variation du coefficient d'amortissement.

Dans une mise en oeuvre, quand ledit organe de contrôle manuel ordonne une poussée à ladite valeur minimale (voire nulle), l'amortissement défini selon la loi d'effort d'amortissement prédéterminée est lui aussi minimal. A contrario, l'amortissement obtenu quand ledit organe de contrôle manuel ordonne une poussée à ladite valeur maximale est lui-même maximal.

Selon une réalisation, lesdits ajustements du pas cyclique des pales de la voilure tournante de l'hélicoptère hybride sont provoqués par l'intermédiaire de ladite assistance en puissance, cette assistance étant au moins en partie définie par ledit pilote automatique, indépendante de ladite loi d'effort d'amortissement prédéterminée qui amortit les manoeuvres du dispositif de commande manuelle de vol.

Par exemple, les manoeuvres sur l'organe de contrôle manuel agissent directement et / ou par l'intermédiaire d'une assistance en puissance sur l'ajustement de la poussée, cet ajustement étant signifié au pilote automatique et ce dernier adaptant alors en réponse au moins un paramètre de vol tel qu'un régime moteur des groupes de motorisation.

Cette adaptation induit en retour une étape de définition d'une consigne d'assistance à l'ajustement du pas cyclique des pales de la voilure tournante, de manière indirecte et donc indépendante.

Dans une mise en oeuvre, lesdites valeurs limite minimale et limite maximale de facteur de charge et / ou lesdites valeurs minimale et maximale de poussée sont étalonnées en fonction d'états limites d'autocabrage de l'hélicoptère hybride.

Un autre objet de l'invention vise un hélicoptère hybride, où un amortisseur est destiné à mettre en oeuvre ce procédé, et qui comporte au moins un moteur dit d'amortissement.

Un système de restitution haptique de manoeuvres d'au moins un dispositif de commande manuelle de vol apte à provoquer des ajustements d'un pas cyclique des pales d'une voilure tournante d'hélicoptère hybride par l'intermédiaire d'une assistance en puissance.

Ce système est par exemple apte à mettre en oeuvre le procédé exposé ci-dessus.

Selon cet objet, pour prédéterminer la loi d'effort d'amortissement prédéterminée qui définit l'amortissement par lesdites restitutions haptiques proportionnellement à une position dudit organe de contrôle manuel de vol, entre les valeurs minimale et maximale de poussée, il est intégré à l'hélicoptère hybride au moins une chaîne de changement d'attitude en vol à laquelle ladite loi d'effort d'amortissement prédéterminée, en parallèle d'une autre chaîne de changement d'attitude de vol, qui agit sur la poussée.

Selon une réalisation, le système d'amortissement comporte une assistance mécanique dédiée à ladite chaîne de changement d'attitude de vol soumise à l'amortissement et en parallèle une assistance mécanique dédiée à ladite chaîne de changement d'attitude de vol qui agît sur la poussée.

Cette assistance mécanique de commande de vol est reliée fonctionnellement d'une part à un dispositif de commande manuelle de vol tel qu'un levier et d'autre part aux surfaces aérodynamiques de la voilure tournante via des plateaux cycliques de manoeuvre du rotor principal, tandis qu'en parallèle, ladite assistance mécanique de contrôle de la poussée est d'une part reliée fonctionnellement audit organe de contrôle et d'autre part à des mécanismes de réglage du pas des pales d'hélices desdits agencements de propulsion.

Dans une réalisation, ladite chaîne de changement d'attitude de vol qui agît sur la poussée comporte au moins deux articulations pivotantes de renvoi et à l'une de ces articulations, au moins un capteur de position relié fonctionnellement audit organe de contrôle manuel de vol, de façon à produire un signal électrique indicatif de la position de cet organe entre lesdites valeurs minimale, voire nulle, et maximale de poussée. Par exemple, ce capteur de position est un capteur de transformation différentielle variable de rotation (RVDT).

Notons que dans des réalisations, ce capteur de position produit et fournit l'information significative de l'évolution entre 0% et 100% de la poussée, définie par le paramètre TCL exposé précédemment.

Selon une réalisation, ladite chaîne de changement d'attitude de vol à laquelle est appliqué l'amortissement comporte au moins deux articulations pivotantes de renvoi. A l'une de ces articulations pivotante de renvoi, au moins un amortisseur rotatif des manoeuvres dudit dispositif de commande manuelle de vol, est sous forme d'un alternateur branché de sorte qu'il débite dans un circuit électronique résistant connecté aux bornes dudit alternateur, de manière à produire une force contrélectromotrice proportionnelle à la vitesse de rotation de ladite articulation recevant l'amortisseur.

Dans un exemple de mise en oeuvre, le dispositif de commande manuelle est couplé fonctionnellement à un capteur de vitesse de manoeuvre, apte à produire un signal de vitesse de manoeuvres proportionnel à la vitesse instantanée à laquelle ce dispositif de commande manuelle est actionné, ledit signal de vitesse étant intégré en tant que variable à la loi d'effort d'amortissement prédéterminée.

Selon les réalisations, la vitesse de manoeuvre est captée par un organe intégré à l'amortisseur (par exemple un alternateur) et /ou par un organe distinct de l'amortisseur.

Par exemple, le système d'amortissement comporte au moins un capteur de position (c'est-à-dire d'état par rapport à la course maximale) dudit dispositif de commande manuelle de vol, un amortisseur de manoeuvres et éventuellement un capteur de vitesse, qui sont fonctionnellement reliés pour directement définir l'amortissement en fonction de la loi d'effort d'amortissement prédéterminée.

Dans un autre exemple, le système comporte un calculateur auquel sont reliés au moins un capteur de position dudit organe de contrôle manuel de la poussée, un amortisseur de manoeuvres et éventuellement un capteur de vitesse de manoeuvre dudit dispositif de commande manuelle de vol.

Encore un autre objet de l'invention est un hélicoptère hybride apte à mettre en oeuvre le procédé d'amortissement et / ou comportant au moins un système d'amortissement tel(s) qu'exposé(s).

Dans un exemple de réalisation, l'hélicoptère hybride est un drone dont un poste de pilotage est déporté hors-bord, et comporte au moins un organe de commande de vol à restitution haptique et un dispositif de contrôle de poussée dont la position instantanée est prise en considération par la loi d'effort d'amortissement prédéterminée.

L'invention et ses avantages apparaissent plus en détail dans la description qui suit d'exemples de réalisation donnés à titre illustratif, en référence aux figures annexées.

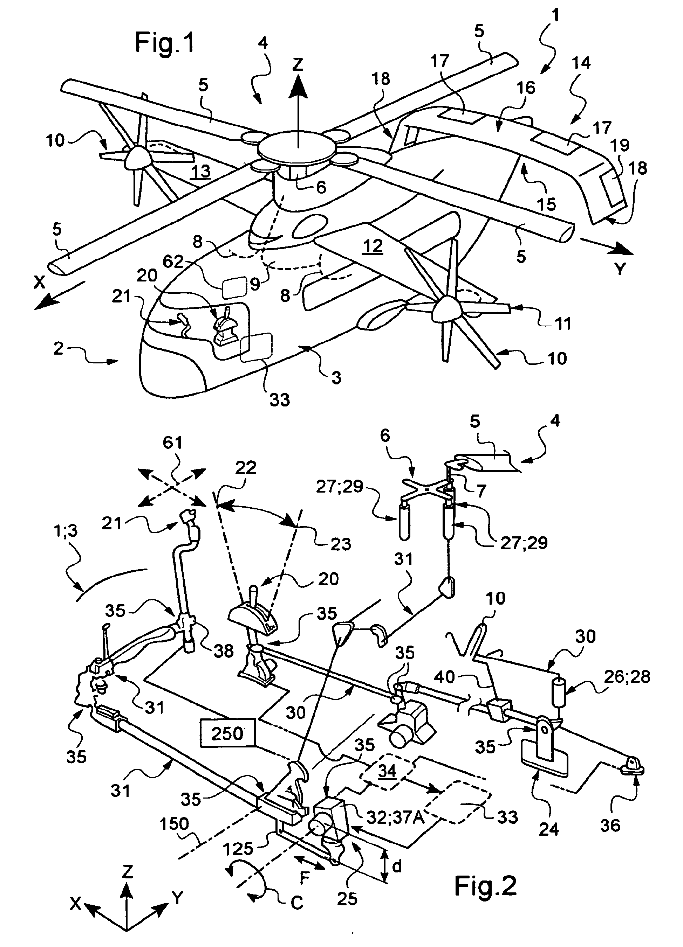

- la figure 1 est une vue schématique en perspective d'élévation longitudinale de dessus et de devant, d'un hélicoptère hybride conforme à l'invention, avec un poste de pilotage équipé d'une part d'une commande de vol à amortir et d'autre part d'un dispositif de contrôle de poussée ;
- la figure 2 est une vue partielle et schématique en perspective d'élévation longitudinale de dessus et par derrière de l'intérieur d'un équipement de poste de pilotage pour hélicoptère hybride conforme à l'invention, avec d'une part vers l'arrière une chaîne de changement d'attitude de vol en poussée qui agit sur le pas d'hélices de propulsion, et d'autre part vers l'avant une chaîne de changement d'attitude de vol en roulis - tangage, qui agit sur des plateaux cycliques contrôlant l'inclinaison du disque d'un rotor principal ;

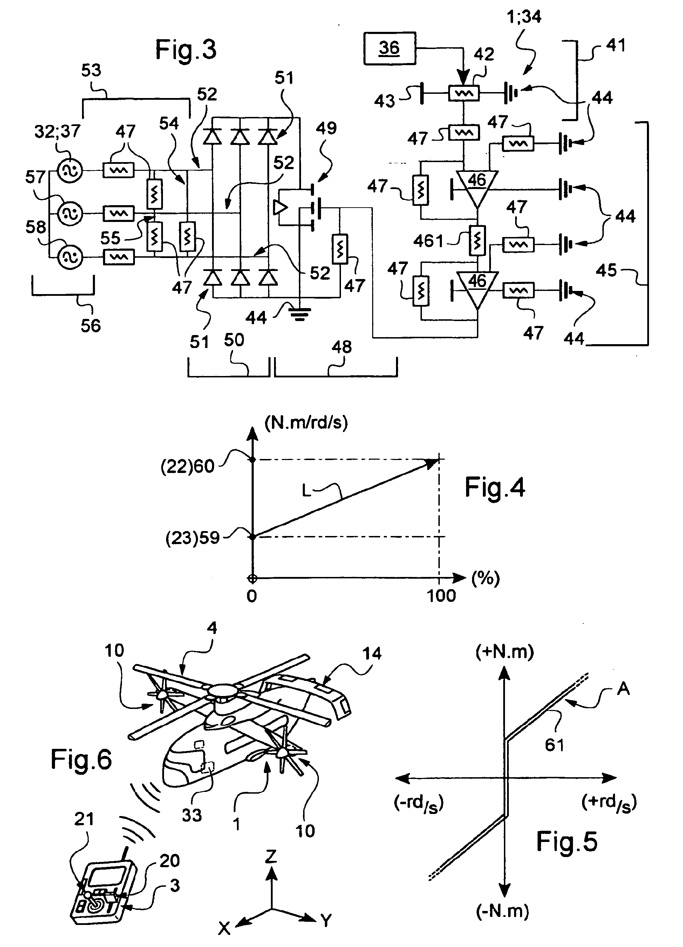

- la figure 3 est une représentation synoptique symbolisée d'un circuit électrique de commande d'une chaîne de changement d'attitude de vol à restitution haptique, pour hélicoptère hybride conforme à l'invention, avec - de droite à gauche - une zone moteurs, une zone de traitement de la charge minimum, une zone de traitement de redressement, une zone de traitement de la charge variable pourvue d'un transistor à effet de champ, une zone de mise en forme des signaux, et une zone de capture de la position instantanée de la commande sur la chaîne concernée ;

- la figure 4 est un tableau illustrant un exemple de valeurs définies selon une loi prédéterminée de variation du coefficient d'amortissement conforme à l'invention, avec en abscisses le pourcentage compris entre 0% et 100% de demande de poussée requis par un pilote à travers un organe de contrôle, et en ordonnées un coefficient d'amortissement effectif appliqué à un dispositif de commande manuelle de vol dans un hélicoptère hybride selon l'invention ; et
- la figure 5 est un graphique qui représente la continuité sans point mort de transition, de la loi d'effort d'amortissement prédéterminée sur un dispositif de commande manuelle de vol à restitution haptique selon l'invention, avec en abscisses des valeurs de vitesses angulaires instantanée de manoeuvre de ce dispositif de commande manuelle de vol, entre deux positions extrêmes maximale et minimale, les ordonnées définissant le couple d'amortissement restitué.
- La figure 6 montre de façon schématique un exemple de réalisation d'hélicoptère hybride conforme à l'invention sous forme de drone, qui possède un poste de pilotage à distance et hors bord, avec notamment un organe de commande de vol à réaction de pondération ou retour d'effort haptique et un dispositif de contrôle de poussée.

Sur les figures 1 et 2 sont représentées trois directions X, Y et Z orthogonales les unes aux autres.

Une direction X dite longitudinale, correspond aux longueurs ou dimensions principales des structures décrites. Ainsi, la composante principale de la vitesse sur trajectoire ou de la poussée d'avancement est étendue suivant cette direction X. En aéronautique, cette direction X correspond généralement à l'axe de roulis d'un aéronef.

Une autre direction Y dite transversale, correspond aux largeurs ou dimensions latérales des structures décrites. La direction longitudinale X et la direction transversale Y sont parfois dites horizontales, par simplification.

Par exemple, l'éloignement par rapport au fuselage de chaque agencement de propulsion évoqué plus haut, est essentiellement mesuré suivant cette direction Y. En aéronautique cette direction transversale Y correspond généralement à l'axe de tangage d'un aéronef. C'est en outre suivant cette direction Y, que se définissent les termes gauche et droite, par exemple pour différencier chaque agencement de propulsion.

Une troisième direction Z est dite d'élévation et correspond aux dimensions en hauteur des structures décrites : les termes haut/bas s'y réfèrent. Parfois, cette direction d'élévation Z est dite verticale. Par simplification, on considère plus haut que l'axe de rotation du rotor principal d'un hélicoptère hybride est sensiblement étendu suivant cette direction d'élévation Z. En aéronautique cette direction d'élévation Z correspond généralement à l'axe de lacet d'un aéronef.

Les directions X et Y définissent conjointement un plan X, Y dit principal (sécant linéairement à celui de la feuille sur la figure 1) à l'intérieur duquel s'inscrit le polygone de sustentation et un plan d'atterrissage.

On rappelle également que classiquement une commande de pas cyclique des pales de la voilure tournante d'un aéronef tel qu'un hélicoptère, agit sur l'attitude de cet aéronef autour de ces deux directions X et Y, respectivement en roulis et tangage.

Sur les figures, la référence 1 désigne de façon générale, un aéronef moderne à voilure tournante, du type hélicoptère hybride.

Comme exposé dans les documents FR 2 916 418, FR 2 916 419 et FR 2 916 420, cet hélicoptère hybride 1 comprend un fuselage 2, à l'avant duquel est prévu le poste de pilotage 3.

Une voilure tournante sous forme ici de rotor principal 4 est destinée à entraîner en rotation des pales 5, au nombre de quatre sur l'exemple de la figure 1.

Au vu de cette figure, on comprend qu'un axe géométrique de rotation de ce rotor principal 4, et donc son mât d'entraînement, peut être considéré comme généralement maintenu en permanence suivant la direction d'élévation Z, nonobstant des ajustements d'assiette de faible amplitude de pales 5, dont certains sont mentionnés ultérieurement.

On a d'ailleurs représenté (figure 2) en 6, un agencement à plateaux cycliques. Cet agencement à plateaux cycliques 6 est apte à modifier la position de biellettes 7 de pas qui elles-mêmes agissent sur l'incidence des pales 5, de façon classique dans le domaine des hélicoptères.

En agissant sur l'incidence des pales 5, il est possible de piloter des changements d'attitude de vol en roulis et en tangage de l'hélicoptère hybride 1, à l'aide du rotor 4. Ces changements ne sont pas sans influence sur le risque d'autocabrage de l'hélicoptère hybride 1, comme on l'a vu.

La référence numérique 9 désigne en traits discontinus sur la figure 1, une boîte de transmission principale (BTP) de puissance de la motorisation du rotor 4 et des agencements de propulsion 10.

Par ailleurs, l'hélicoptère hybride 1 comporte plusieurs groupes de motorisation 8 disposés chacun à distance transversalement l'un de l'autre, au sein du fuselage 2, de part et d'autre par rapport d'un plan longitudinal de symétrie en élévation de l'appareil 1.

Sur la figure 1, ces deux groupes de motorisation 8 prennent la forme de turbomoteurs, respectivement à droite et à gauche, et ne sont pas directement visibles en raison de la présence de carénages.

Chaque groupe de motorisation 8 est relié à un agencement de propulsion 10, par la boîte de transmission principale 9 (BTP).

En premier lieu, ces deux groupes de motorisation 8 entraînent en rotation la voilure tournante formée par le rotor 4, par l'intermédiaire notamment de la boîte de transmission principale 9.

En second lieu, chacun de ces groupes de motorisation 8 porte et assure l'entrainement en rotation des agencements de propulsion 10.

Chacun de ces agencements de propulsion 10 est essentiellement en forme d'une hélice, dont les pales ont un pas ajustable afin de modifier la poussée.

Chacun des agencements de propulsion 10, gauche et droit, est monté sur un axe de rotation sensiblement longitudinal (direction X sur les figures 1 et 2). Plus précisément, chacun des agencements de propulsion 10 est monté d'un côté opposé transversalement du fuselage 2 à l'axe de l'autre hélice et agencement de propulsion 10. Notons que chaque agencement de propulsion 10 est d'axe sensiblement fixe.

On a vu que dans l'hélicoptère hybride 1, les hélices des agencements 10 produisent conjointement du fait de leur fonctionnement qui est à poussée différentielle, un couple de stabilisation longitudinale.

De la sorte, leur fonction est non seulement de participer à la propulsion de cet hélicoptère hybride 1, mais aussi d'assurer une fonction anti-couple qui le stabilise longitudinalement.

De plus, l'hélicoptère hybride 1 est pourvu d'une voilure fixe 11 composée de deux demi-ailes 12 et 13, l'une à gauche et l'autre à droite. Ces deux demi-ailes 12 et 13 sont disposées, selon l'exemple illustré à la figure 1, au niveau d'une partie du fuselage 2 sensiblement sommitale en élévation (direction Z). La voilure fixe 11 est donc dite haute.

Les agencements de propulsion 10 sont disposés respectivement à gauche et à droite du fuselage 2, sur la demi-aile 12 et la demi-aile 13. Chaque agencement de propulsion 10 est relié mécaniquement à la boîte principale de transmission 9 (BTP), mais aussi d'un point de vue commandes, par des structures non représentées, à l'intérieur de ces demi-ailes 12 et 13.

Suivant la direction d'élévation Z, sensiblement à niveau avec la voilure fixe 11, l'hélicoptère hybride 1 comporte un ensemble de surfaces de stabilisation et de manoeuvre 14, disposé à proximité d'une partie arrière 15 du fuselage 2.

Cet ensemble 14 est ici généralement en forme de « U » renversé, et présente pour les manoeuvres de changement de profondeur, un empennage horizontal 16 avec deux gouvernes de profondeur 17 mobiles par rapport à une partie avant et fixe de l'empennage horizontal 16.

Pour les manoeuvres de changement d'attitude de vol de l'hélicoptère hybride 1, l'ensemble 14 possède deux empennages sensiblement verticaux 18, de chaque côté d'un empennage horizontal 16, c'est-à-dire à ses extrémités transversales externes. Sur chaque empennage 18, une gouverne de direction 19 est montée mobile.

Pour contrôler l'avancement de l'hélicoptère hybride 1, le pilote dispose notamment d'un organe de contrôle manuel de la poussée, désigné en 20. Cet organe 20 permet de manière classique, de modifier le pas moyen de pales des hélices des agencements de propulsion 10.

Sur les figures 1 et 2, cet organe de contrôle manuel 20 est agencé dans le poste de pilotage 3.

II est à noter qu'à proximité de l'organe de contrôle manuel 20 de la poussée, toujours sur les figures 1 et 2, un levier de pas cyclique faisant notamment office de dispositif de commande manuelle de vol 21, est disposé dans le poste de pilotage 3 de l'hélicoptère hybride 1.

Ce dispositif de commande manuelle de vol 21 agit soit sur les changements d'attitude en tangage, soit sur les changements d'attitude en roulis, de l'hélicoptère hybride 1.

La juxtaposition de ces deux types de commandes est inusuelle pour un pilote d'hélicoptère classique et moderne, l'ajustement de la poussée à l'avancement ne nécessitant pas d'organe de commande dédié dans les autres types de giravions.

En effet, il se fait que pour les autres types de giravions tels que les hélicoptères classiques, la poussée est produite uniquement par l'inclinaison de la voilure tournante, et est pilotée via le levier de pas cyclique et les plateaux cycliques associés alors qu'une régulation automatique est assurée sur les hélicoptères à turbomoteurs entre le pas et la puissance pour éviter que le rotor ne se freine lorsque l'on augmente le pas général des pales du rotor donc la portance, soit du même coup la traînée et par suite la puissance nécessaire.

Pour cet organe de contrôle manuel de vol 20, on parle parfois de « Thrust Control Lever » ou TCL, en langue anglaise, par analogie avec les commandes manuelles de poussée d'avions par exemple.

Dans un hélicoptère hybride 1, l'organe de contrôle 20 agit de manière identique sur les pas des pales des deux hélices des agencements 10, afin d'obtenir une variation collective de ces pas. Par exemple, le pilote va requérir une augmentation de 5° du pas de l'ensemble des hélices des agencements 10 pour augmenter la poussée longitudinale résultante, générée notamment par ces hélices.

On comprend déjà que cette poussée des hélices des agencements 10 est ajustable via l'organe de contrôle 20 entre deux positions extrêmes 22 et 23.

Une première position extrême 22 vers l'avant est considérée à 100%. Une seconde position extrême 23 vers l'arrière, est considérée à 0%. Ces première et seconde positions extrêmes 22 et 23 correspondent respectivement à une valeur maximale et à une valeur minimale de poussée, en principe nulle.

On confirmera qu'en vol stationnaire, dans un hélicoptère hybride 1, la position 23 à 0% maintient une certaine poussée différentielle, notamment pour assumer la fonction anti couple.

Sur la figure 2, on voit partiellement les équipements du poste de pilotage 3 d'un hélicoptère hybride 1 conforme à l'invention.

Sur cette figure il est principalement représenté, d'une part une chaîne cinématique de changement d'attitude de vol 24 en poussée. Cette chaîne 24 agit sur le pas des pales des hélices des agencements de propulsion 10.

D'autre part, une chaîne cinématique de changement d'attitude de vol 25 agit sur les plateaux cycliques 6 de réglage du pas cyclique des pales de la voilure tournante formée par le rotor principal 4.

Comme précisé ci-dessus, selon les déplacements de manoeuvre opérés sur le dispositif de commande manuelle 21, le pilote peut agir sur l'attitude en tangage et en roulis de l'hélicoptère hybride 1.

Classiquement, les déplacements longitudinaux sur le dispositif 21, vers l'avant et / ou l'arrière, provoquent des changements d'attitude en tangage de l'hélicoptère hybride 1, en piqué ou cabré respectivement.

Les déplacements transversaux sur le dispositif 21, à gauche et / ou droite, provoquent des changements d'attitude en roulis de l'hélicoptère hybride 1, vers la gauche et la droite respectivement.

Chacune de ces chaînes cinématiques de changement d'attitudes de vol 24 et 25 comporte une assistance en puissance 26 et 27 respectivement. Ces assistances en puissance 26 et 27 sont ici sous forme d'un ou plusieurs vérins hydrauliques 28 et 29, et sont constamment activées.

En général, les chaînes cinématiques de changement d'attitude de vol 24 et 25 comportent notamment d'autres vérins, dont ceux appelés de « TRIM » pour la commande de pilotage automatique. Ces vérins de TRIM » sont en général de type électriques et parallèles. Encore d'autres vérins, par exemple électriques et en série, sont agencés dans de telles chaînes cinématiques de changement d'attitude de vol 24 et 25.

Sur la figure 2, on remarque que les plateaux cycliques 6 de la voilure tournante 4 coopèrent avec plusieurs vérins 29, dont deux vérins 29 transversaux pour les ajustements en roulis, et un vérin 29 central pour les ajustements en tangage.

En bref, la chaîne cinématique de changement d'attitude de vol 24 comporte classiquement dans le domaine aéronautique, depuis son organe de contrôle manuel 20, une tringlerie 30 avec diverses bielles de renvoi et articulations qui aboutissent d'abord à l'assistance 26 puis à un mécanisme usuel de réglage du pas des pales de chaque agencement de propulsion 10 à hélice.

Similairement, la chaîne cinématique de changement d'attitude de vol 25, comporte classiquement dans le domaine des giravions, depuis son dispositif de commande manuelle de vol 21 en forme de manche dit cyclique, pour les changements d'attitude en tangage, une tringlerie 31 avec diverses bielles de renvoi ou guignols et articulations 35 qui aboutissent d'abord à un amortisseur de tangage 32, puis à l'assistance 27 et enfin à des plateaux cycliques 6 usuels de réglage du pas cyclique des pales 5 de la voilure tournante 4.

Par souci de clarté, seuls les constituants de la chaîne cinématique de commande de vol manuelle 25 agissant sur le tangage ont été représentés à la figure 2.

Pour plus de détails sur la structure et le fonctionnement des équipements classiques de postes de pilotage d'hélicoptère (non hybride), on peut se reporter au document FR 2 864 028 qui porte sur une commande de vol permettant à un pilote la mise en autorotation d'un giravion monomoteur, lors d'une panne moteur.

Avant d'aborder le fonctionnement de l'invention, précisons que classiquement, l'hélicoptère hybride 1 est équipé d'un pilote automatique 33 qui est symbolisé en traits pointillés sur les figures 1 et 2.

Ce pilote automatique 33 est ici relié à un circuit logique 34 électronique, de manière à être apte à agir sur l'assistance 27 en puissance d'ajustement du pas cyclique des pales 5 du rotor principal 4. Cette action du pilote automatique 33 est notamment fondée sur la vitesse air instantanée de l'hélicoptère hybride 1.

Dans certains hélicoptères, par exemple légers, la liaison au pilote automatique (PA) n'est pas prévue. En outre, il convient de distinguer cette liaison avec un asservissement en facteur de charge. En fait, quand le pilote automatique 33 agit sur l'assistance en puissance du pas cyclique de la voilure 4, ce sont des paramètres représentatifs du facteur de charge qui déterminent la loi d'effort d'amortissement prédéterminée.

Par exemple, ces paramètres sont le pas propulsif (selon l'organe 20), la vitesse de déplacement du dispositif 21 qui sont pris en compte pour cette détermination de la loi d'effort d'amortissement prédéterminée.

Cependant, les manoeuvres du dispositif de commande manuelle 21 de vol sont amorties par des restitutions haptiques définies selon une loi d'effort d'amortissement prédéterminée, spécifique à l'invention et désignée par « A » (dont un résultat est illustré sur la figure 5).

On note que cette loi d'effort d'amortissement prédéterminée A est linéaire sans discontinuité en théorie en faisant abstraction des imperfections du système.

Il en résulte pour le pilote un durcissement (ou une raideur variable) de l'actionnement du dispositif de commande manuelle 21 de vol, qui est introduit par l'application d'un couple résistant dû à une structure d'amortissement 32 couplée audit dispositif de commande manuelle de vol.

Selon la réalisation illustrée, cette structure est un amortisseur rotatif, en conséquence également référencé 32, qui est disposé dans la chaîne cinématique de changement d'attitude de vol 25 en tangage.

Toujours sur la figure 2, on remarque une autre réalisation de structure d'amortissement couplée audit dispositif de commande manuelle de vol, qui est schématiquement désignée par le trait discontinu 150.

Selon cette réalisation, un moteur d'amortissement similaire au moteur 32, est agencé directement au niveau d'un axe d'articulation d'un renvoi de la chaîne cinématique de changement d'attitude de vol concernée.

Selon la figure 2, ce couple est désigné par la flèche C. Ce couple C génère, dans un sens de rotation ou dans le sens opposé, un effort d'amortissement qui est désigné en F sur ladite figure 2. Du fait de la loi de variation de coefficient prédéterminée L (figure 4), cet effort d'amortissement F est ici linéaire et agît sur la chaîne cinématique de changement d'attitude de vol 25 en tangage.

Cet effort d'amortissement F également conforme à la loi d'effort d'amortissement prédéterminée A, est appliqué dans l'exemple illustré à une bielle 125 de la chaîne cinématique de changement d'attitude de vol 25 en tangage.

Bien entendu, le pilote ressent de ce fait un effort de restitution haptique 61 aussi appelé « effort d'amortissement », illustré sur la figure 2 ou sur la figure 5 (sur cette figure, en N.m/rd/s).

Cet effort de restitution haptique 61, qui résulte de la loi d'effort d'amortissement prédéterminée A, agît sur le dispositif de commande manuelle de vol 21 dédié au tangage, à savoir le manche de pas cyclique. Cette action de l'effort de restitution haptique 61 est évidemment proportionnelle à l'effort d'amortissement F et orientée dans un sens correspondant.

Il va de soi que l'effort de restitution haptique 61 est également dépendant en termes de sens, de vitesse et d'accélération, de l'architecture de ladite chaîne cinématique de changement d'attitude de vol à laquelle il s'applique.

L'un des buts de ce durcissement variable, est d'éviter que le pilote ordonne une commande trop brutale, au risque de confronter des conditions pouvant aboutir à un autocabrage par exemple.

Autrement dit, ladite loi d'effort d'amortissement prédéterminée A des manoeuvres de ce dispositif de commande de vol manuelle 21 est ici prédéterminée en fonction d'un facteur de charge instantané de l'hélicoptère hybride 1, de sorte que ce facteur de charge instantané soit maintenu entre ses valeurs limite minimale et limite maximale.

Globalement, la raideur variable de l'actionnement dudit dispositif de commande manuelle de vol 21 présente notamment une composante initiale générée par l'assistance 27 pour un état préalable, une composante variable propre à la restitution haptique définie selon ladite loi d'effort d'amortissement prédéterminée A conforme à l'invention, et naturellement une composante sensiblement constante propre aux frictions de ladite chaîne cinématique de commande de vol 25.

Il en va de même pour une restitution haptique en roulis, faisant intervenir une chaîne cinématique 250.

Une telle loi d'effort d'amortissement prédéterminée A s'applique selon une réalisation de l'invention à la chaîne de changement d'attitude de vol en tangage et / ou en roulis.

Afin de ne pas être directement lié dans la définition de cette composante variable à élaborer de façon itérative et en temps réel, aux actions du pilote automatique 33 fondées sur la vitesse air instantanée de l'hélicoptère hybride, l'invention recourt à un paramètre extérieur (paramètre TCL) à savoir la position instantanée de l'organe de contrôle manuel de la poussée comme précisé ultérieurement.

Selon une réalisation de l'invention, la loi d'effort d'amortissement prédéterminée A est définie proportionnellement à une position dudit organe de contrôle manuel 20 de la poussée, entre ses deux positions extrêmes 23 et 22 qui correspondent respectivement à une valeur minimale en principe nulle de poussée en vol stationnaire et une valeur maximale de poussée admissible par les agencements de propulsion 10.

L'ensemble des moyens logiques et physiques mis en oeuvre à cette fin forment un système de restitution haptique.

Avec ce système de restitution haptique, pour prédéterminer la loi d'effort d'amortissement prédéterminée A proportionnellement à une position intermédiaire entre la position extrême 23 minimale et la position extrême 22 maximale dudit organe de contrôle manuel 20, la chaîne cinématique de changement d'attitude en vol de vol 25 à laquelle ladite loi d'effort d'amortissement prédéterminée A est à appliquer, est intégrée à l'hélicoptère hybride 1 en parallèle de la cinématique de changement d'attitude en vol de vol 24 qui agît sur la poussée.

On rappelle que ce système haptique s'applique également selon l'invention, à une chaîne cinématique 250 agissant sur l'attitude en roulis de l'hélicoptère hybride 1.

Dans la réalisation de la figure 2, ladite chaîne cinématique de changement d'attitude de vol 24 en poussée comporte au moins deux articulations pivotantes 35 de renvoi. A l'articulation 35 située à l'arrière de la chaîne 24, le système de restitution haptique présente un capteur 36 de position du contrôle de poussée.

Ce capteur 36 est relié fonctionnellement audit organe de contrôle 20 de façon à produire un signal électrique indicatif de la position de cet organe 20 entre ses valeurs minimale et maximale de poussée. Par exemple, ce capteur 36 est de type à transformation différentielle variable de rotation (Rotary Variable Differential Transformer ou RVDT en langue anglaise) ou par exemple de type potentiomètre.

Toujours selon la réalisation de la figure 2, la chaîne cinématique de changement d'attitude de vol 25 en tangage comporte parmi les articulations 35 pivotantes de renvoi, un amortisseur 32 des manoeuvres dudit dispositif de commande manuelle de vol 21.

Sur cette figure 2, l'amortisseur 32 comporte un « moteur en fonctionnement inversé », c'est-à-dire un alternateur 56. Dans cet exemple, l'alternateur 56 qui forme l'amortisseur 32, possède plusieurs enroulements de stator d'alternateur désignés en 37, 57 et 58.

Selon cet exemple qui semble actuellement préféré, l'amortisseur 32 des manoeuvres de modification de poussée par les agencements de propulsion 10 est donc un alternateur 56. Cet alternateur 56 est branché par ses bornes, de sorte qu'il débite dans le circuit logique 34 électronique qui est résistant, de manière à produire une force contrélectromotrice proportionnelle à la vitesse de rotation de ladite articulation 35 recevant l'amortisseur 32. De ce fait, un organe de mesure de cette vitesse n'est pas indispensable.

Par fonctionnement inversé, on comprend que l'introduction par le pilote d'un mouvement en entrée sur le dispositif de commande manuelle de vol 21, provoque en sortie de l'alternateur 56 -c'est-à-dire de ses enroulements 37, 57 et 58- une tension qui est fonction de la vitesse dudit mouvement à amortir.

Cette force contrélectromotrice proportionnelle participe au freinage du dispositif de commande manuelle de vol 21, et constitue la composante variable du couple de restitution haptique.

Dans d'autres réalisations, est prévu un capteur 38 dédié à cette mesure de vitesse. Un tel capteur 38 soit se substitue, soit s'ajoute à un autre organe de mesure de vitesse. Comme illustré sur la figure 2 le capteur 38 est adjoint à l'articulation 35 pour en déterminer la vitesse de rotation.

Ainsi, dans l'exemple alternatif de la figure 2, le dispositif de commande manuelle de vol 21 est couplé fonctionnellement à un tel capteur 38 de vitesse de manoeuvre. Ce capteur 38 produit un signal de vitesse de manoeuvre proportionnel à la vitesse instantanée à laquelle ce dispositif de commande manuelle de vol 21 est actionné.

Ce signal de vitesse issu du capteur 38 -ou le signal issu de l'alternateur 56- est intégré en tant que paramètre (dit ci-dessus "extérieur") à la loi d'effort d'amortissement prédéterminée A, par une connexion électrique qui relie au circuit logique 34 ledit capteur 38.

Ainsi, le système de restitution haptique comporte son capteur 36 apte à fournir la position instantanée dudit organe de contrôle manuel de vol 20. En outre, le système de restitution haptique comporte le moteur 37 qui est également appelé « moteur d'amortissement » ou « moteur rotatif » par ailleurs.

On a exposé que ce moteur 37 a pour fonction d'amortir les manoeuvres du dispositif de commande manuelle de vol 21. De plus, le système de restitution haptique comporte le capteur 38 qui mesure la vitesse dudit dispositif de commande manuelle de vol 21.

Tous ces constituants du système de restitution haptique sont fonctionnellement reliés au circuit logique 34 électronique, pour directement définir l'amortissement en fonction de la loi d'effort d'amortissement prédéterminée A.

Ce système de restitution haptique aboutit logiquement au dispositif de commande manuelle de vol 21, et le freine dans la direction propre à la manoeuvre de commande de vol appliquée par le pilote, mais en sens inverse à l'action de ce dernier.

Ce freinage prend initialement la forme d'un effort d'amortissement F, selon ladite loi prédéterminée L de variation du coefficient d'amortissement, appliqué par exemple à la bielle 125 de la chaîne cinématique de changement d'attitude de vol 25. Dans cette configuration, l'effort d'amortissement F est sensiblement égal au couple introduit par le moteur d'amortissement 37, divisé par la dimension d'un bras de levier désigné en « d » sur la figure 2. Ce bras de levier « d » est mesuré entre l'axe de rotation dudit moteur d'amortissement 37 et la bielle 125.

Il est à noter qu'ici les capteurs 36 et / ou 38 sont du type à transformation différentielle variable de rotation (RVDT). Dans d'autres réalisations, il s'agit de capteurs 36 / 38 soit analogiques soit numériques, tels que les capteurs à effet Hall, des capteurs optiques, ou analogues.

Dans un autre exemple, le système comporte un calculateur (schématisé en 62 sur la figure 1) auquel sont reliés au moins un capteur 36 de position dudit organe de contrôle manuel 20, un amortisseur 32 des manoeuvres et éventuellement un capteur de vitesse 38.

Maintenant l'invention est expliquée en termes fonctionnels, c'est-à-dire de phases, d'étapes et de procédé de restitution haptique lors des manoeuvres du dispositif de commande manuelle de vol 21.

En préalable, il est rappelé que par l'intermédiaire de l'assistance 27 en puissance, ce dispositif de commande manuelle de vol 21 et le pilote automatique 33 agissent sur le pas cyclique des pales 5 du rotor principal 4. Ce n'est qu'indirectement que les manoeuvres de l'organe de contrôle manuel 20 (TCL) freinent ledit dispositif de commande manuelle de vol 21.

Sans entrer dans les détails, soulignons également que dans l'hélicoptère hybride 1 selon la figure 2, les manoeuvres sur ledit organe de contrôle manuel 20 de la poussée n'agissent pas seulement indirectement sur l'ajustement de la poussée par l'intermédiaire d'une assistance 26 en puissance.

En effet, à travers une voie directe 40 ou dérivée, visible sur la figure 2, les manoeuvres sur l'organe de contrôle manuel 20 de la poussée peuvent agir directement sur l'ajustement de la poussée.

Cet ajustement du contrôle de poussée est signifié au pilote automatique 33, qui adapte en réponse au moins un paramètre de vol tel qu'un régime moteur des agencements de motorisation 10.

Cette adaptation de régime induit ici en retour et via le circuit logique 34 la définition d'une nouvelle consigne d'assistance à l'ajustement du pas cyclique des pales 5 de la voilure tournante, de manière indirecte et donc indépendante.

Dans des réalisations, encore une fois, le circuit logique 34 est indépendant du pilote automatique 33.

En se reportant aux figures 3 à 5, on expose la manière dont les manoeuvres du dispositif de commande manuelle de vol 21 en tangage sont amorties par des restitutions haptiques définies selon la loi d'effort d'amortissement prédéterminée A. Cette loi d'effort d'amortissement A est prédéterminée, tout comme la loi de variation du coefficient d'amortissement L de l'exemple de la figure 4.

Cet exposé vaut également pour les restitutions haptiques des commandes de vol en roulis, à travers la chaîne cinématique de changement d'attitude de vol 250.

D'un point de vue logique, on montre sur le diagramme synoptique de la figure 3 un exemple de circuit logique 34 de commande de la chaîne cinématique de changement d'attitude en vol 25 de vol de l'hélicoptère hybride 1 conforme à l'invention.

Dans la description qui suit, par souci de simplicité, les mêmes références s'appliquent à tous les composants identiques ou similaires du circuit logique 34, même si leurs spécifications par exemple en termes d'impédance peuvent être différentes d'un composant de même référence à l'autre.

En entrée du circuit logique 34 de la figure 3, est fournie une valeur instantanée de la position de l'organe de contrôle manuel 20 de la poussée. Cette valeur est fournie à une zone de capture 41 de ladite valeur instantanée de position, entre les positions extrêmes avant 22 et arrière 23.

Un signal significatif de cette position instantanée, est par exemple produit par le capteur 36 de la chaîne 24. On a vu que ce capteur 36 peut être de différents types, dont celui d'un potentiomètre.

Cette zone de capture 41 comprend une résistance variable 42, montée en série entre une source 43 de courant continu et l'une des mises à la masse du circuit 34 qui sont toutes désignées en 44.

En sortie de la résistance variable 42, est connectée une zone 45 de mise en forme des signaux. Cette zone 45 permet de traduire le signal de position issu du capteur 36, en une consigne de charge variable.

A cette fin, la zone 45 comporte une succession en série de deux amplificateurs inverseurs composés d'amplificateur opérationnels 46 et de résistances 47. Chaque amplificateur possède sa propre source 43, sa propre mise à la masse 44 et une sortie. On voit une résistance 461 entre les deux amplificateurs 46 sur la figure 3.

La sortie de la zone 45 et donc d'un second amplificateur opérationnel 46 débouche en série sur une zone 48 de traitement de la charge variable, pourvue d'un transistor 49 à effet de champ, dont la fonction est de piloter la charge par l'intermédiaire d'une commande électronique. Par exemple, ce transistor 49 est de type MOSFET.

En sortie de la zone 48 de traitement de la charge variable, une zone 50 de traitement de redressement est montée en série. La zone 50 de traitement de redressement comporte en parallèle, trois rampes de deux diodes 51 en série, dont chacune débouche sur une jonction de ligne distincte 52. Grâce à la transformation opérée par la zone 50 de traitement de redressement, on obtient un courant à même d'être adressé via sa ligne 52 de connexion propre.

Aux trois sorties de cette zone 50, les lignes de connexion 50 forment une zone 53 de traitement de la charge minimum.

Un premier pont 54 de cette zone 53 de charge minimum, relie une ligne 52 à sa ligne 52 opposée, et comporte en série une résistance 47 unique.

Un second pont 55 de cette zone 53 relie les lignes 52 et comporte une résistance 47 en série entre chaque ligne 52. On comprend que cette zone 53 de traitement assure un coefficient de charge minimum de poussée.

Par exemple, pour une poussée minimale (position extrême arrière 23) et relative au paramètre TCL égale à 0%, c'est-à-dire à un pas collectif moyen minimal des pales des hélices, le coefficient d'amortissement est de l'ordre de 3,2 Nm/rd/s (pour Newton-mètre/radian/seconde). Pour une poussée maximale et relative du paramètre TCL égal à 100% (position extrême avant 22), le coefficient d'amortissement est de l'ordre de 14,3 Nm/rd/s. Dans ce dernier cas, le pas collectif moyen des pales des hélices est maximal.

Dans cet exemple, la zone de traitement 53 assure un amortissement minimal, pour laquelle le coefficient d'amortissement produit par l'amortisseur 32 (moteur 37) est de l'ordre de 3,1 à 3,2 Nm/rd/s. Alors la position de l'organe de contrôle manuel 20 est à 0%, ce qui correspond à la position extrême 23 arrière.

Enfin, intervient une zone à « moteurs » désignée en 56. Une ligne de connexion 52 est dédiée à un composant dit « moteur » de cette zone 56, c'est-à-dire à des amortisseurs agissant sur une chaîne cinématique de changement d'attitude en vol spécifique. Comme pour l'amortisseur 32 des manoeuvres de l'organe de contrôle manuel 20 de la poussée, ces amortisseurs de la zone à moteurs 56 produisent une force contrélectromotrice de freinage proportionnelle à la restitution haptique désirée.

Non représenté sur la figure 3 l'amortisseur 32 comprend aussi un étage multiplicateur relié à la chaîne cinématique de changement d'attitude de vol 25 et un rotor d'alternateur 56.

Selon cette réalisation, le dispositif de commande manuelle de vol 21 à amortissement de manoeuvre agit sur le comportement en tangage de l'hélicoptère hybride 1. Il s'agît là d'un exemple, l'invention pouvant évidemment s'appliquer à diverses chaînes cinématiques de changement d'attitude en vol et à divers types d'aéronefs.

D'ailleurs, dans cette réalisation, un autre dispositif de commande manuelle de vol 21 relié au circuit logique 34, est soumis à un amortissement de manoeuvre par restitution haptique selon l'invention.

Cette restitution haptique est obtenue via l'actionnement d'un autre « moteur » 57, et agit sur le comportement en roulis ou encore en lacet de l'hélicoptère hybride 1.

En alternative, il serait possible d'envisager qu'un des dispositifs de commande manuelle de vol 21 à restitution haptique selon l'invention, agisse sur le roulis de l'hélicoptère hybride 1. Cette restitution haptique serait dans un tel exemple, opérée par un « moteur inversé» de la figure 3.

En synthèse, on comprend que la loi d'effort d'amortissement prédéterminée A qui permet de définir les valeurs d'effort de pondération des manoeuvres du dispositif de commande manuelle de vol 21 est préétablie en fonction d'un facteur de charge instantané de l'aéronef 1 auquel cette loi A s'applique.

Une telle loi d'effort d'amortissement prédéterminée A est préétablie de sorte que ledit facteur de charge instantané soit maintenu entre ses valeurs limite minimale et limite maximale, proportionnellement à une position de l'organe de contrôle manuel 20 (TCL) de la poussée comprise entre les valeurs et positions extrêmes 22 maximale et 23 minimale en principe nulle.

Dans la configuration de la figure 2, la loi d'effort d'amortissement prédéterminée A exerce, comme déjà précisé, un effort de restitution haptique F sur la bielle 125.

Cet effort de restitution haptique F est sensiblement égal au couple C exercé par l'amortisseur 32, divisé par le bras de levier «d » entre l'axe de rotation dudit amortisseur 32 et l'articulation correspondante de ladite bielle 125.

Des coefficients d'amortissement sont variables avec un amortisseur 32 sous forme du moteur 37. Ces coefficients correspondent à la loi prédéterminée L de variation du coefficient d'amortissement. Un exemple d'une telle loi de variation du coefficient d'amortissement L est représenté sur la figure 4. Par exemple, les lois d'amortissement L et loi d'effort d'amortissement prédéterminé A sont enregistrées dans le calculateur 62 (figure 1).

Sur la figure 4, cette loi prédéterminée L de variation du coefficient d'amortissement qui permet de pondérer les manoeuvres du dispositif de commande manuelle de vol 21 relativement à la position d'un organe de contrôle manuel de la poussée 20 est donc sensiblement linéaire, entre 0% et 100% de la course de pas collectif moyen des hélices des agencements de propulsion 10.

Une telle course est désignée parfois par l'expression « commande collective de poussée » ou encore par « paramètre TCL », comme exposé précédemment.

Dans l'exemple de la figure 4, pour une poussée désignée en 59 relative à la position extrême 23 (arrière sur la figure 2) de l'organe de contrôle manuel 20 (TCL) qui est considérée à 0%, c'est-à-dire à une poussée totale des hélices des agencements 10 en principe nulle, le coefficient d'amortissement produit par l'amortisseur 32 est de l'ordre de 3,2 Nm/rd/s.

Bien entendu, si la poussée globale des hélices des agencements 10 est nulle dans le cas d'un vol stationnaire, l'architecture générale et le fonctionnement spécifique de l'hélicoptère hybride 1 imposent que ces hélices produisent toutefois une poussée différentielle pour contrecarrer le couple de lacet généré par la voilure tournante 4.

Dans cette mise en oeuvre, quand ledit organe de contrôle manuel 20 ordonne une poussée à ladite valeur minimale à 0%, c'est-à-dire lorsqu'il est en position extrême arrière 23, l'amortissement selon la loi d'effort d'amortissement A qui est produit par le moteur 37 en fonction de ladite loi prédéterminée de variation du coefficient d'amortissement L, est minimal.

Par contre, l'amortissement obtenu par l'actionnement du moteur 37 correspond, quand ledit organe de contrôle manuel 20 ordonne une poussée à valeur maximale de 100% (position extrême avant 22), à un freinage de restitution haptique lui-même maximal.

Alors, ledit coefficient d'amortissement est de l'ordre de 14,3 Nm/rd/s, si l'effet haptique de l'amortisseur 32 conformément à la loi prédéterminée L de variation du coefficient d'amortissement est maximal.

Selon cette réalisation, lesdits ajustements du pas cyclique des pales du rotor 4 de l'hélicoptère hybride sont provoqués par l'intermédiaire de ladite assistance 27 en puissance, cette assistance 27 étant au moins en partie définie par ledit pilote automatique 33, mais indépendamment de ladite loi d'effort d'amortissement prédéterminée A, c'est-à-dire indirectement après traitement par le circuit 34, sans lien direct avec les manoeuvres opérées sur l'organe de contrôle manuel 20 de la poussée.

Dans une réalisation, lesdits ajustements du pas cyclique des pales 5 de la voilure tournante 4 de l'hélicoptère hybride 1 sont provoqués par l'intermédiaire de ladite assistance en puissance, cette assistance étant au moins en partie définie par ledit pilote automatique 33, indépendamment de ladite loi prédéterminée d'effort d'amortissement A qui dépend des manoeuvres de l'organe de contrôle manuel 20 de poussée.

Par exemple, les manoeuvres sur ledit organe de contrôle manuel 20 de poussée agissent directement et / ou par l'intermédiaire d'une assistance en puissance sur l'ajustement de la poussée, cet ajustement étant signifié au pilote automatique, ce dernier adaptant alors en réponse au moins un paramètre de vol tel qu'un régime moteur des agencements de motorisation 10, adaptation qui induit en retour une définition d'une nouvelle consigne d'assistance à l'ajustement du pas cyclique des pales 5 de la voilure tournante 4, de manière indirecte et donc indépendante

En fonction des spécificités de vol et structurales de l'hélicoptère hybride 1, lesdites valeurs limite minimale et limite maximale de facteur de charge sont étalonnées pour éviter à cet l'hélicoptère hybride 1 d'atteindre des états limites d'autocabrage.

En se reportant à la figure 5, on voit bien que la loi d'effort d'amortissement prédéterminée A est établie de manière à garantir la continuité sans point mort de transition, des efforts 61 de restitution haptique.

Ceci permet d'éviter une discontinuité ou un passage à vide sans restitution haptique dans ledit dispositif de commande manuelle 21, lorsque celui-ci est manoeuvré d'abord dans un sens, puis en sens inverse, étant rappelé que le dispositif de commande de vol 21 est relatif à l'attitude en tangage, et par ailleurs en roulis.

Selon l'exemple de la figure 5, on voit en ordonnées les valeurs de l'effort d'amortissement 61 selon l'invention, et en abscisses la vitesse en rotation de manoeuvre d'un dispositif de commande manuelle de vol 21 soumis à la loi d'effort d'amortissement prédéterminée A.

Dans ce cas, les efforts de restitution haptique 61 définis par exemple en fonction du couple C représenté à la figure 2 et restitués dans ce dispositif de commande manuelle de vol 21 à partir d'un effort F, sont constamment croissants ou décroissants, même lorsque ce dispositif 21 est actionné avec un renversement de sens.

Ce renversement de sens des manipulations dudit dispositif de commande manuelle 21 est représenté en abscisses, par des valeurs angulaires négatives à gauche et positives à droite, de la position instantanée de manoeuvre de ce dispositif 21 entre deux positions extrêmes maximale et minimale.

Généralement, on comprend donc que l'invention est liée aux possibilités d'augmentation de vitesse de déplacement en avance, c'est-à-dire longitudinale suivant la direction X, rendues possibles avec les aéronefs à voilure tournante de type hybride par exemple tels qu'exposés dans les documents FR 2 916 418, FR 2 916 419 et FR 2 916 420.

Aux vitesses élevées atteintes par ces hélicoptères hybrides, des contraintes considérables dues aux charges aérodynamiques, agissent sur les surfaces de voilure, qu'elles soient appelées fixes ou tournantes.

On a vu que ces charges aérodynamiques ont des effets délétères et utiles. Il est évidemment dommageable que des efforts trop proches des limites de résistance matérielle de l'appareil soient appliqués à ce dernier, à travers ses surfaces.

A l'inverse, la perception de ces charges aérodynamiques, par le pilote, à travers les commandes de vol de l'aéronef 1, présente l'avantage de prévenir ce pilote de la proximité desdites limites de résistance. En conséquence, le pilote est averti qu'il est préférable, voire urgent, d'ajuster son vol en vue de réduire ces charges.

Or, lorsque les commandes de vol sont motorisées par exemple à l'aide d'un actionnement par servocommande hydraulique, les charges aérodynamiques ne sont plus renvoyées vers les commandes, et ne peuvent donc plus être perçues par le pilote. Celui-ci n'est donc plus prévenu d'une situation de fatigue des matériaux voire de danger. De la sorte, le pilote risque de ne pas être en mesure de réagir.

Ce problème est particulièrement crucial pour les aéronefs 1 à voilure tournante de type hybride, dont les commandes de surfaces aérodynamiques sont motorisées et qui sont à même d'atteindre des vitesses air et / ou des facteurs de charge importants.

Dans une telle situation, l'aéronef hybride risque notamment d'être confronté à un autocabrage, c'est-à-dire un cabrage excessif et spontané.

Une voie courante en pratique pour tenter de limiter les risques d'autocabrage d'un hélicoptère, est de restituer l'effet des charges aérodynamiques par des contraintes artificielles de réponse amorties dans les commandes, de manière plus ou moins proportionnelle.

Ainsi, si la charge sur une surface aérodynamique augmente, sa restitution dans les commandes correspondantes est également accrue, et inversement.

Typiquement, les hélicoptères sont équipés d'amortisseurs de restitution à gain constant, notamment du fait de leur vitesse d'avancement relativement faible par rapport à celle d'un aéronef hybride à voilure tournante. Classiquement, de tels amortisseurs sont couplés aux commandes de roulis, de tangage et de lacet.

Avec l'invention, il est possible de résoudre les problèmes nouveaux rencontrés avec les hélicoptères hybrides 1, pour lesquels il convient de gérer à la fois les paramètres cycliques d'une voilure tournante, de poussée d'agencements de propulsion différentielle et d'ajustement de surfaces aérodynamiques de stabilisation et de manoeuvre de type empennages et gouvernes.

Sur la figure 6, on voit de façon analogue un exemple d'hélicoptère hybride 1 conforme à l'invention sous forme de drone.

Ce drone d'hélicoptère hybride 1 possède un poste de pilotage 3, qui est ici hors-bord, c'est-à-dire à distance du fuselage 2.

Sur ce poste 3 déporté, est installé de manière à pouvoir être actionné par un opérateur de radio-pilotage (non représenté), un dispositif de commande 21 de vol à réaction de pondération, ici qui agît sur l'orientation de tangage et / ou de roulis du drone d'hélicoptère hybride 1.

Sur ce dispositif 21 est exercé le retour d'effort conforme à l'invention, pour restituer à distance les contraintes subies par les surfaces aérodynamiques de l'hélicoptère 1. Ce poste 3 possède en outre un organe de contrôle de poussée 20, qui coopère avec le dispositif 21 comme on l'a exposé plus haut, pour produire les valeurs d'efforts variables de restitution.

Grâce à l'invention, un effet haptique en retour de restitution d'effort adapté aux hélicoptères hybrides 1 est obtenu, et appliqué notamment à des commandes de tangage, et à moindre niveau de roulis.

En outre, le choix d'un retour haptique aux commandes de l'hélicoptère hybride 1 selon l'invention est parfaitement adapté aux déplacements des dispositifs manuels (comparable au dispositif 21) de commande de vol, pour garantir un pilotage particulièrement précis et confortable.

Du fait d'un respect accru des limites de vol de l'hélicoptère hybride 1 selon l'invention telles que le facteur de charge, la sécurité en vol de ce type avancé d'hélicoptère est encore améliorée.

Un autre avantage obtenu pour l'hélicoptère hybride 1 selon l'invention est une longévité augmentée de l'appareil, du fait d'un endommagement moindre de ses constituants concernés, en particulier de ses surfaces aérodynamiques et de leurs mécanismes de contrôle et commande.

Par ailleurs, une fiabilité accrue est obtenue pour l'hélicoptère hybride 1 selon l'invention, liée au fait que la restitution haptique appropriés aux dispositifs de commande manuelle de vol est indépendante de fonctions similaires opérées par le pilote automatique.

On notera également que le terme « manuel » doit être considéré au sens large, c'est-à-dire comme issu d'une manoeuvre du pilote, et non comme limité au sens littéral relatifs aux mains.

En effet, des réalisations de l'invention non illustrées portent sur une restitution haptique appliquée au palonnier de commande de vol en lacet, qui donc est à considérer comme un dispositif de commande manuelle de vol, au même titre que le manche désigné en 21.

Similairement, l'invention permet d'appliquer une restitution haptique à un dispositif de commande de vol 21 sous forme de levier de manoeuvre du pas collectif des pales 5 de la voilure tournante 4 de l'hélicoptère hybride 1.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé de restitution haptique de manoeuvres d'au moins un dispositif de commande (21) manuelle de vol apte à provoquer des ajustements d'au moins une surface aérodynamique (5, 10, 14) d'un hélicoptère hybride (1) par l'intermédiaire d'une chaîne cinématique de changement d'attitude de vol (25) qui est pourvue d'une assistance (27) en puissance, cet hélicoptère hybride (1) comportant au moins un fuselage (2), une voilure tournante (4) et une voilure fixe (11), sur laquelle des agencements de propulsion (10) à poussée différentielle anticouple sont répartis symétriquement de part et d'autre du fuselage (2), ces agencements (10) étant contrôlés entre une valeur minimale et une valeur maximale de poussée, par un organe de contrôle (20) manuel de poussée, cet hélicoptère hybride (1) comportant en outre un pilote automatique (33) apte à agir sur l'assistance (27) en puissance d'ajustement dudit pas cyclique des pales (5) de la voilure tournante (4), lesdites manoeuvres dudit dispositif de commande (21) étant amorties par des restitutions haptiques définies selon une loi d'effort d'amortissement (A) prédéterminée,
**caractérisé en ce que** ladite loi d'effort (A) d'amortissement des manoeuvres du dispositif de commande manuelle de vol (21) est prédéterminée en fonction d'un facteur de charge instantané de l'hélicoptère hybride (1), de sorte que ce facteur de charge instantané soit maintenu entre ses valeurs limite minimale et limite maximale, proportionnellement à une position dudit organe de contrôle (20) de la poussée, entre les valeurs de poussée minimale (23) et maximale (22).

2. Procédé selon la revendication 1,
**caractérisé en ce que** ledit dispositif de commande manuelle (21) à amortissement (32) de manoeuvres agit sur l'attitude en tangage de l'hélicoptère hybride (1), lesdites surfaces aérodynamiques comportant des pales (5) d'une voilure tournante (4), dont on ajuste le pas cyclique.

3. Procédé selon la revendication 1 ou 2,
**caractérisé en ce que** ledit dispositif de commande manuelle (21) à amortissement (32) de manoeuvres agit sur l'attitude en roulis de l'hélicoptère hybride (1), lesdites surfaces aérodynamiques comportant des pales (5) d'une voilure tournante (4), dont on ajuste le pas cyclique.

4. Procédé selon l'une des revendications 1 à 3,
**caractérisé en ce que** ledit dispositif de commande manuelle (21) à amortissement (32) de manoeuvres agit sur l'attitude en lacet de l'hélicoptère hybride (1), lesdites surfaces aérodynamiques faisant partie des agencements de propulsion (10) et / ou d'un ensemble de surfaces de stabilisation et de manoeuvre (14).

5. Procédé selon l'une des revendications 1 à 4,
**caractérisé en ce que** ladite loi d'effort d'amortissement (A) prédéterminée des manoeuvres dudit dispositif de commande manuelle (21) est obtenue par l'application d'un couple (C) résistant exercé par un amortisseur (32) sur ladite chaîne cinématique de changement d'attitude (25), avec un coefficient d'amortissement dudit amortisseur (32) qui est variable selon une autre loi de variation du coefficient d'amortissement (L) prédéterminée en fonction de la course de pas collectif moyen des pales d'hélices desdits agencements de propulsion (10).

6. Procédé selon la revendication 5,
**caractérisé en ce que**, quand ledit organe de contrôle manuel (20) ordonne une poussée à ladite valeur minimale, voire nulle, le pas collectif desdites hélices des agencements de propulsion (10) est minimal et ledit coefficient d'amortissement par l'amortisseur (32) défini selon la loi de variation du coefficient d'amortissement (L) prédéterminée est sensiblement compris entre 2,5 et 3,5 Nm/rd/s, tandis que le coefficient d'amortissement par l'amortisseur (32) obtenu quand ledit organe de contrôle (20) ordonne une poussée à ladite valeur maximale est lui-même maximal, ce coefficient d'amortissement par l'amortisseur (32) est sensiblement compris entre 13,5 et 14,5.

7. Procédé selon l'une des revendications 2 à 6,
**caractérisé en ce que** lesdits ajustements du pas cyclique des pales (5) de la voilure tournante (4) de l'hélicoptère hybride (1) sont provoqués par l'intermédiaire de ladite assistance (27) en puissance, cette assistance (27) étant au moins en partie définie par ledit pilote automatique (33), indépendante de ladite loi d'effort d'amortissement prédéterminée (A) des manoeuvres du dispositif de commande manuelle de vol (21) ; les manoeuvres sur ledit organe de contrôle (20) manuel de la poussée agissant directement et / ou par l'intermédiaire d'une assistance (26) en puissance sur l'ajustement de la poussée, cet ajustement étant signifié à un pilote automatique (33), ce dernier adaptant alors en réponse au moins un paramètre de vol tel qu'un régime moteur des agencements de propulsion (10), adaptation qui induit en retour une définition d'une nouvelle consigne d'assistance à l'ajustement du pas cyclique des pales (5) de la voilure tournante, de manière indirecte et donc indépendante.

8. Procédé selon l'une des revendications 1 à 7,
**caractérisé en ce que** lesdites valeurs limite minimale et limite maximale de facteur de charge et / ou lesdites valeurs minimale et maximale de poussée sont étalonnés en fonction d'états limites d'autocabrage de l'hélicoptère hybride (1).

9. Hélicoptère hybride (1) comportant au moins un amortisseur (32) destiné à mettre en oeuvre le procédé selon l'une des revendications 1 à 8, **caractérisé en ce qu'**il comporte au moins un moteur d'amortissement (37) ; un système de restitution haptique de manoeuvres d'au moins un dispositif de commande (21) manuelle de vol étant apte à provoquer des ajustements d'un pas cyclique des pales (5) d'une voilure tournante (4) d'hélicoptère hybride (1) par l'intermédiaire d'une assistance (27) en puissance, cet hélicoptère hybride (1) comportant au moins un fuselage (2), ladite voilure tournante (4) et une voilure fixe (11), sur laquelle des agencements de propulsion (10) à poussée différentielle anticouple sont répartis symétriquement de part et d'autre du fuselage (2), un organe de contrôle (20) manuel de la poussée étant prévu de manière à ce que ses manoeuvres contrôlent lesdits agencements de propulsion (10), entre une position (22) maximale de poussée et une position (23) minimale, cet hélicoptère hybride (1) comportant en outre un pilote automatique (33) relié fonctionnellement à l'assistance (27) en puissance de façon à participer audit ajustement du pas cyclique desdites pales (5) de la voilure tournante, et ledit dispositif de commande (21) manuelle étant agencé de sorte que ses manoeuvres soient amorties par des restitutions haptiques définies selon une loi d'effort d'amortissement (A) prédéterminée ; pour prédéterminer ladite loi d'effort d'amortissement (A) prédéterminée proportionnellement à une position (23-22) dudit organe de contrôle (20) de la poussée entre les valeurs de poussée minimale et maximale, une chaîne cinématique de changement d'attitude en vol (25), à laquelle ladite loi d'effort d'amortissement (A) est à appliquer, est intégrée à l'hélicoptère hybride (1) en parallèle d'une autre chaîne cinématique de changement d'attitude en vol (24) de la poussée, dotée dudit organe de contrôle (20).

10. Hélicoptère hybride (1) selon la revendication 9,
**caractérisé en ce que** le système de restitution haptique de manoeuvres comporte une assistance (27) dédiée à ladite chaîne cinématique de changement d'attitude en vol (25) et en parallèle une assistance (26) dédiée à ladite autre chaîne cinématique de changement d'attitude en vol (24) de la poussée, cette assistance (27) de commande de direction de vol étant reliée fonctionnellement d'une part à un dispositif de commande (21) manuelle tel qu'un levier et d'autre part à au moins une surface aérodynamique de la voilure tournante (4) via des plateaux cycliques (6) de commande du pas cyclique des pales (5) de ladite voilure tournante, tandis qu'en parallèle, ladite assistance (26) de contrôle de la poussée est d'une part reliée fonctionnellement audit organe de contrôle (20) et d'autre part à des mécanismes de réglage du pas des pales d'hélices desdits agencements de propulsion (10).

11. Hélicoptère hybride (1) la revendication 10,
**caractérisé en ce qu'**il met en oeuvre le procédé selon l'une des revendications 1 à 9.

12. Hélicoptère hybride (1) selon l'une des revendications 9 à 11,
**caractérisé en ce que** ladite autre chaîne cinématique de changement d'attitude en vol (24) de la poussée comporte au moins deux articulations (35) pivotantes de renvoi et à l'une de ces articulations (35) au moins un capteur (36) de position relié fonctionnellement audit organe de contrôle (20) de façon à produire un signal électrique indicatif de la position (22-23) de cet organe (20) entre lesdites valeurs minimale et maximale de poussée ; par exemple, ce capteur (36) de position est un capteur de transformation différentielle variable de rotation.

13. Hélicoptère hybride (1) selon l'une des revendications 9 à 12,
**caractérisé en ce que** ladite chaîne cinématique de changement d'attitude en vol (25) comporte au moins deux articulations (35) pivotantes de renvoi et à l'une de ces articulations (35), au moins un amortisseur (32), des manoeuvres dudit dispositif de commande manuelle de vol (21), sous forme d'un alternateur ou moteur (37) branché de sorte qu'il débite dans un circuit électronique (34) résistant connecté aux bornes dudit amortisseur (32) afin de produire une force contrélectromotrice proportionnelle à la vitesse de rotation de ladite articulation (35) recevant l'amortisseur (32).

14. Hélicoptère hybride (1) selon l'une des revendications 9 à 13,
**caractérisé en ce que** ledit dispositif de commande manuelle de vol (21) est couplé fonctionnellement à un capteur (38) de vitesse de manoeuvre, apte à produire un signal de vitesse de manoeuvre proportionnel à la vitesse instantanée à laquelle ce dispositif de commande manuelle de vol (21) est actionné, ledit signal de vitesse étant alors intégré en tant que paramètre à la loi d'amortissement prédéterminé (A).

15. Hélicoptère hybride (1) selon la revendication 14,
**caractérisé en ce que** ledit système de restitution comporte au moins un capteur (36) de position dudit organe de contrôle manuel (20), un amortisseur (32) de manoeuvres dudit dispositif de commande manuelle de vol (21), et un capteur (38) de vitesse, qui sont fonctionnellement reliés pour directement définir l'amortissement en fonction de la loi d'effort d'amortissement prédéterminée (A).

16. Hélicoptère hybride (1) selon l'une des revendications 9 à 15,
**caractérisé en ce que** le système comporte un calculateur (62) auquel sont reliés au moins un capteur de position (36) dudit organe de contrôle (20) et un amortisseur (32) de manoeuvres dudit dispositif de commande manuelle (21) de vol et éventuellement un capteur de vitesse (38) dudit organe de contrôle (20).

17. Hélicoptère hybride (1) selon l'une des revendications 9 à 16,
**caractérisé en ce que** cet hélicoptère hybride (1) est apte à mettre en oeuvre le procédé de restitution haptique selon l'une des revendications 1 à 8 ; et **en ce qu'**il (1) est un drone dont un poste de pilotage (3) est déporté hors-bord, et comporte au moins un dispositif de commande manuelle (21) de vol à restitution haptique et un organe de contrôle manuel (20) de poussée dont la position instantanée est prise en considération par la loi d'effort (L).

## Claims

1. Haptic feedback method for movements of at least one manual flight control device (21) suitable for bringing about adjustments of at least one aerodynamic surface (5, 10, 14) of a hybrid helicopter (1) via a flight-attitude changing kinematic linkage (25) that is provided with power assistance (27), said hybrid helicopter (1) comprising at least a fuselage (2), a rotary wing (4) and a fixed wing (11) having anti-torque differential thrust propulsion arrangements (10) distributed symmetrically thereon on either side of the fuselage (2), said arrangements (10) being controlled between a minimum and maximum thrust value by a manual thrust control member (20), said hybrid helicopter (1) further comprising an autopilot (33) suitable for acting on the power assistance (27) for adjusting said cyclic pitch of the blades (5) of the rotary wing (4), said movements of said control device (21) being damped by haptic feedback defined according to a predetermined damping force law (A),
**characterised in that** said damping force law (A) for the movements of the manual flight control device (21) is predetermined as a function of an instantaneous load factor of the hybrid helicopter (1) in such a manner that this instantaneous load factor is maintained between its minimum and maximum limit values in proportion to a position of said thrust control member (20) between the minimum (23) and maximum (22) thrust values.

2. Method according to Claim 1,
**characterised in that** said manual control device (21) with damping (32) of movements acts on the pitch attitude of the hybrid helicopter (1), said aerodynamic surfaces comprising blades (5) of a rotary wing (4), with the cyclic pitch thereof being adjusted.

3. Method according to Claim 1 or 2,
**characterised in that** said manual control device (21) with damping (32) of movements acts on the roll attitude of the hybrid helicopter (1), said aerodynamic surfaces comprising blades (5) of a rotary wing (4), with the cyclic pitch thereof being adjusted.

4. Method according to one of Claims 1 to 3,
**characterised in that** said manual control device (21) with damping (32) of movements acts on the yaw attitude of the hybrid helicopter (1), said aerodynamic surfaces forming part of the propulsion arrangements (10) and/or of a set of stabilising and control surfaces (14).

5. Method according to one of Claims 1 to 4,
**characterised in that** said predetermined damping force law (A) for the movements of said manual control device (21) is obtained by applying an opposing torque (C) exerted by a damper (32) on said attitude changing kinematic linkage (25), with a damping coefficient of said damper (32) that is variable according to another damping coefficient variation law (L) predetermined as a function of the mean collective pitch stroke of the propeller blades of said propulsion arrangements (10).

6. Method according to Claim 5,
**characterised in that**, when said manual control member (20) orders thrust at said minimum, or even zero, value, the collective pitch of said propellers of the propulsion arrangements (10) is at a minimum and said coefficient of damping by the damper (32) defined according to the predetermined damping coefficient variation law (L) lies substantially in the range between 2.5 and 3.5 Nm/rd/s, while the coefficient of damping by the damper (32) obtained when said control member (20) orders thrust at said maximum value is itself at a maximum and this coefficient of damping by the damper (32) lies substantially in the range between 13.5 and 14.5.

7. Method according to one of Claims 2 to 6,
**characterised in that** said adjustments of the cyclic pitch of the blades (5) of the rotary wing (4) of the hybrid helicopter (1) are brought about via said power assistance (27), this assistance (27) being defined at least in part by said autopilot (33) independently of said predetermined damping force law (A) for the movements of the manual flight control device (21); the movements of said manual control thrust member (20) acting directly and/or via power assistance (26) on the thrust adjustment, this adjustment being delivered to an autopilot (33) which then responds by adapting at least one flight parameter such as an engine speed of the propulsion arrangements (10), which adaptation gives rise in return to a definition of a new assistance setpoint for adjusting the cyclic pitch of the blades (5) of the rotary wing, in a manner that is indirect and thus independent.

8. Method according to one of Claims 1 to 7,
**characterised in that** said minimum and maximum load factor limit values and/or said minimum and maximum thrust values are calibrated as a function of pitch-up limit states of the hybrid helicopter (1).

9. Hybrid helicopter (1) comprising at least one damper (32) intended for implementing the method according to one of Claims 1 to 8, **characterised in that** it comprises at least one damping motor (37); a haptic feedback system for movements of at least one manual flight control device (21) being suitable for bringing about adjustments of a cyclic pitch of the blades (5) of a rotary wing (4) of the hybrid helicopter (1) via power assistance (27), said hybrid helicopter (1) comprising at least a fuselage (2), said rotary wing (4) and a fixed wing (11) having anti-torque differential thrust propulsion arrangements (10) distributed symmetrically thereon on either side of the fuselage (2), a manual thrust control member (20) being provided so that its movements control said propulsion arrangements (10) between a maximum (22) and minimum (23) thrust position, said hybrid helicopter (1) further comprising an autopilot (33) functionally connected to the power assistance (27) so as to participate in said cyclic pitch adjustment of said blades (5) of the rotary wing, and said manual control device (21) being arranged in such a manner that its movements are damped by haptic feedback defined according to a predetermined damping force law (A); in order to predetermine said predetermined damping force law (A) in proportion to a position (23-22) of said thrust control member (20) between the minimum and maximum thrust values, a flight-attitude changing kinematic linkage (25) to which said damping force law (A) is to be applied is incorporated in the hybrid helicopter (1) in parallel with another flight-attitude changing kinematic linkage (24) for thrust and provided with said control member (20).

10. Hybrid helicopter (1) according to Claim 9,
**characterised in that** the haptic feedback system for movements comprises assistance (27) dedicated to said flight-attitude changing kinematic linkage (25) and, in parallel, assistance (26) dedicated to said other flight-attitude changing kinematic linkage (24) for thrust, this flight direction control assistance (27) being functionally connected firstly to a manual control device (21) such as a lever and secondly to at least one aerodynamic surface of the rotary wing (4) via swashplates (6) for controlling the cyclic pitch of the blades (5) of said rotary wing, while in parallel, said thrust control assistance (26) is functionally connected firstly to said control member (20) and secondly to mechanisms for adjusting the pitch of the propeller blades of said propulsion arrangements (10).

11. Hybrid helicopter (1) according to Claim 10,
**characterised in that** it implements the method according to one of Claims 1 to 9.

12. Hybrid helicopter (1) according to one of Claims 9 to 11,
**characterised in that** said other flight-attitude changing kinematic linkage (24) for thrust comprises at least two pivoting crank hinges (35) and at one of said hinges (35) at least one position sensor (36) functionally connected to said control member (20) so as to produce an electric signal indicative of the position (22-23) of said member (20) between said minimum and maximum thrust values; for example, this position sensor (36) is a rotary variable differential transformer sensor.

13. Hybrid helicopter (1) according to one of Claims 9 to 12,
**characterised in that** said flight-attitude changing kinematic linkage (25) comprises at least two pivoting crank hinges (35) and at one of said hinges (35) at least one damper (32) of the movements of said manual flight control device (21), the damper being in the form of an alternator or motor (37) connected in such a manner as to deliver to an opposing electronic circuit (34) connected to the terminals of said damper (32) in order to produce a back-electromotive force proportional to the speed of rotation of said hinge (35) receiving the damper (32).

14. Hybrid helicopter (1) according to one of Claims 9 to 13,
**characterised in that** said manual flight control device (21) is functionally coupled to a movement speed sensor (38) suitable for producing a movement speed signal proportional to the instantaneous speed at which said manual flight control device (21) is actuated, said speed signal then being incorporated as a parameter in the predetermined damping law (A).

15. Hybrid helicopter (1) according to Claim 14,
**characterised in that** said feedback system comprises at least one sensor (36) for sensing the position of said manual control member (20), a damper (32) for damping movements of said manual flight control device (21), and a speed sensor (38), which are functionally connected to define the damping directly as a function of the predetermined damping force law (A).

16. Hybrid helicopter (1) according to one of Claims 9 to 15,
**characterised in that** the system comprises a computer (62) having connected thereto at least one position sensor (36) for sensing the position of said control member (20), and a damper (32) for damping movements of said manual flight control device (21), and optionally a speed sensor (38) for sensing the speed of said control member (20).

17. Hybrid helicopter (1) according to one of Claims 9 to 16,
**characterised in that** said hybrid helicopter (1) is suitable for implementing the haptic feedback method according to one of Claims 1 to 8, and **in that** it (1) is a drone having a piloting station (3) remote and not on board, and comprises at least one manual flight control device (21) with haptic feedback and a manual thrust control member (20), the instantaneous position of which is taken into consideration by the force law (L).

## Patentansprüche

1. Verfahren zur haptischen Rückkopplung bei der Betätigung mindestens einer manuellen Flugsteuerungsvorrichtung (21), mit der bzw. mit denen mindestens eine aerodynamische Fläche (5, 10, 14) eines Hybridhelikopters (1) über einen Antriebsstrang zur Änderung der Fluglage (25) justiert werden kann, und die mit einer Servounterstützung (27) versehen ist, wobei der Hybridhelikopter (1) mindestens einen Rumpf (2), eine Drehflügelanordnung (4) und eine feststehende Flügelanordnung (11) aufweist, auf der Vortriebsanordnungen (10) mit differentiellem Antidrehmoment-Schub symmetrisch zu beiden Seiten des Rumpfes (2) angeordnet sind, wobei diese Anordnungen (10) zwischen einem Minimalwert und einem Maximalwert für den Schub durch ein manuelles Schubsteuerorgan (20) gesteuert werden, wobei der Hybridhelikopter (1) außerdem einen Autopiloten (33) aufweist, der auf die Servounterstützung (27) der Justierung des zyklischen Anstellwinkels der Rotorblätter (5) der sich drehenden Flügelanordnung (4) einwirken kann, wobei die Betätigungen der Steuervorrichtung (21) durch haptische Rückkopplungen gedämpft werden, die gemäß einer vorbestimmten Dämpfungskraftgesetzmäßigkeit (A) definiert sind,
**dadurch gekennzeichnet, dass** die Dämpfungskraftgesetzmäßigkeit (A) der Betätigungen der manuellen Flugsteuerungsvorrichtung (21) vorbestimmt ist in Abhängigkeit von einem augenblicklichen Lastfaktor des Hybridhelikopters (1), derart, dass dieser augenblickliche Lastfaktor zwischen seinen minimalen und maximalen Grenzwerten gehalten wird, proportional zu einer Stellung des Schubsteuerorgans (20) zwischen den minimalen (23) und maximalen (22) Schubwerten.

2. Verfahren nach Anspruch 1,
**dadurch gekennzeichnet, dass** die manuelle Steuervorrichtung (21) mit Dämpfung (32) seiner Betätigungen auf das Nickverhalten des Hybridhelikopters (1) einwirkt, wobei die aerodynamischen Flächen Rotorblätter (5) einer Drehflügelanordnung (4) aufweisen, deren Neigungswinkel justiert wird.

3. Verfahren nach einem der Ansprüche 1 oder 2,
**dadurch gekennzeichnet, dass** die manuelle Steuervorrichtung (21) mit Dämpfung (32) ihrer Betätigungen auf das Schlingerverhalten des Hybridhelikopters (1) einwirkt, wobei die aerodynamischen Flächen Rotorblätter (5) einer Drehflügelanordnung (4) aufweisen, deren Neigungswinkel justiert wird.

4. Verfahren nach einem der Ansprüche 1 bis 3,
**dadurch gekennzeichnet, dass** die manuelle Steuervorrichtung (21) mit Dämpfung (32) ihrer Betätigungen auf Gierbewegungen des Hybridhelikopters (1) einwirkt, wobei die aerodynamischen Flächen einen Teil der Vortriebsanordnungen (10) und/oder einer Gruppe von Stabilisierungs- und Steuerflächen (14) darstellen.

5. Verfahren nach einem der Ansprüche 1 bis 4,
**dadurch gekennzeichnet, dass** die vorbestimmte Dämpfungskraftgesetzmäßigkeit (A) für die Betätigungen der manuellen Steuervorrichtung (21) erhalten wird durch die Anwendung eines von einem Dämpfer (32) auf den Antriebsstrang (25) zur Änderung der Fluglage ausgeübten Drehmoments (C), mit einem Dämpfungskoeffizienten des Dämpfers (32), der gemäß einer anderen Gesetzmäßigkeit der Veränderung des Dämpfungskoeffizienten (L) variiert und vorbestimmt ist in Abhängigkeit von den mittleren kollektiven Neigungsverstellungen der Propellerblätter der Vortriebsanordnungen (10).

6. Verfahren nach Anspruch 5,
**dadurch gekennzeichnet, dass**, wenn das manuelle Steuerorgan (20) befiehlt, dem Minimalwert, der Null sein kann, einen Schub zu geben, der kollektive Verstellschritt der Propeller der Vortriebsanordnungen (10) minimal ist und der Koeffizient der Dämpfung durch den Dämpfer (32), der definiert ist durch die Änderungsgesetzmäßigkeit des vorbestimmten Dämpfungskoeffizienten (L), im Wesentlichen im Intervall zwischen 2,5 und 3,5 Nm/rd/s liegt, während der Dämpfungskoeffizient des Dämpfers (32), der erhalten wird, wenn das Steuerorgan (20) eine Veränderung des Maximalwertes befiehlt, selbst maximal ist, und dieser Dämpfungskoeffizient des Dämpfers (32) im Wesentlichen im Intervall zwischen 13,5 und 14,5 Nm/rd/s liegt.

7. Verfahren nach einem der Ansprüche 2 bis 6,
**dadurch gekennzeichnet, dass** die Justierungen der Neigungswinkel der Rotorblätter (5) der Drehflügelanordnung (4) des Hybridhelikopters (1) über die Servounterstützung (27) erfolgen, wobei diese Servounterstützung (27) mindestens teilweise durch den Autopiloten (33) definiert ist, unabhängig von der vorbestimmten Gesetzmäßigkeit der Dämpfungskraft (A) auf die Betätigungen der manuellen Flugsteuerungsvorrichtung (21), wobei die Betätigungen des manuellen Schubsteuerorgans (20) direkt und/oder über eine Servounterstützung (26) auf die Schubjustierung einwirken, wobei diese Justierung einem Autopiloten (33) zugeordnet ist, der in Reaktion auf mindestens einen Flugparameter, wie z.B. die Motordrehzahl der Vortriebsanordnungen (10), eine Adaptation vornimmt, die wiederum zu einer Definition eines neuen Sollwertes bei der Kraftverstärkung zur Justierung des Neigungswinkels der Rotorblätter (5) der Drehflügelanordnung führt, auf indirekte Weise und somit unabhängig.

8. Verfahren nach einem der Ansprüche 1 bis 7,
**dadurch gekennzeichnet, dass** die minimalen und maximalen Grenzwerte des Lastfaktors und/oder die minimalen und maximalen Grenzwerte des Schubs in Abhängigkeit von den Grenzzuständen der Neigung des Hybridhelikopters (1) geeicht sind.

9. Hybridhelikopter (1) mit mindestens einem Dämpfer (32) zur Durchführung des Verfahrens nach einem der Ansprüche 1 bis 8, **gekennzeichnet durch**: mindestens einen Dämpfermotor (37), ein System zur haptischen Rückkopplung von Betätigungen mindestens einer manuellen Flugsteuervornchtung (21) zum Justieren der Neigung der Rotorblätter (5) einer Drehflügelanordnung (4) des Hybridhelikopters (1) über eine Servounterstützung (27), wobei der Hybridhelikopter (1) mindestens einen Rumpf (2) aufweist, die Drehflügelanordnung (4) und eine feste Flügelanordnung (11) auf der Vortriebsanordnungen (10) mit differentiellem Antidrehmoment-Schub symmetrisch zu beiden Seiten des Rumpfes (2) angeordnet sind, ein manuelles Schubsteuerorgan (20) derart vorgesehen ist, dass seine Betätigungen die Vortriebsanordnungen (10) zwischen einer maximalen Schubstellung (22) und einer minimalen Schubstellung (23) steuern, wobei der Hybridhelikopter (1) außerdem einen Autopiloten (33) aufweist, der funktionell mit der Servounterstützung (27) derart verbunden ist, dass er an der Justierung der Neigung der Rotorblätter (5) der Drehflügelanordnung beteiligt ist, und die manuelle Steuervorrichtung (21) derart ausgebildet ist, dass ihre Betätigungen **durch** die haptischen Rückstellungen gedämpft werden, die nach einer vorbestimmten Gesetzmäßigkeit der Dämpfungskraft (A) defmiert sind, und um die Gesetzmäßigkeit der Dämpfungskraft (A) proportional zu einer Position (23-22) des Schubsteuerorgans (20) zwischen minimalen und maximalen Schubwerten vorzubestimmen, wird ein Antriebsstrang zur Änderung der Fluglage (25), auf die die Gesetzmäßigkeit der Dämpfungskraft (A) angewendet wird, im Hybridhelikopter (1) parallel zu einem anderen Antriebsstrang zur Änderung der Fluglage (24) bezüglich des Schubes, die mit dem Steuerorgan (20) versehen ist, integriert.

10. Hybridhelikopter (1) nach Anspruch 9,
**dadurch gekennzeichnet, dass** das System zur haptischen Rückkopplung von Betätigungen eine Servounterstützung (27) aufweist, die dem Antriebsstrang zur Änderung der Fluglage (25) zugeordnet ist, und parallel dazu eine Servounterstützung (26), die dem anderen Antriebsstrang zur Änderung der Fluglage (24) bezüglich des Schubs zugeordnet ist, wobei die Servounterstützung (27) der Steuerung der Richtung des Flugs einerseits mit einer manuellen Steuervorrichtung (21), wie z.B. einem Steuerknüppel, und andererseits mit mindestens einer aerodynamischen Fläche der Drehflügelanordnung (4) über zyklische Steuerplatten (6) für die Steuerung der Neigung der Rotorblätter (5) der Drehflügelanordnung funktionell verbunden ist, während parallel dazu die Servounterstützung (26) der Steuerung des Schubs einerseits funktionell mit dem Steuerorgan (20) und andererseits mit Mechanismen zur Regelung der Neigung der Rotorblätter der Propeller der Vortriebsanordnungen (10) verbunden ist.

11. Hybridhelikopter (1) nach Anspruch 10,
**dadurch gekennzeichnet, dass** er das Verfahren nach einem der Ansprüche 1 bis 9 umsetzt.

12. Hybridhelikopter (1) nach einem der Ansprüche 9 bis 11,
**dadurch gekennzeichnet, dass** der andere Antriebsstrang zur Änderung der Fluglage (24) bezüglich des Schubs mindestens zwei Zwischenschwenkgelenke (35) aufweist, und an einem dieser Gelenke (35) mindestens einen Positionssensor (36), der funktionell mit dem Steuerorgan (20) derart verbunden ist, dass er ein elektrisches Signal erzeugt, das die Position (22-23) dieses Organs (20) zwischen den Minimalwerten und Maximalwerten des Schubes angibt, wobei der Positionssensor (36) zum Beispiel einen Sensor für eine variable differentielle Transformation der Rotationsbewegung sein kann.

13. Hybridhelikopter (1) nach einem der Ansprüche 9 bis 12,
**dadurch gekennzeichnet, dass** die Bewegungsüberträgung zur Änderung der Fluglage (25) mindestens zwei Zwischenschwenkgelenke (35) aufweist, wobei an einem dieser Gelenke (35) mindestens ein Dämpfer (32) der Betätigungen der manuellen Flugsteuerung (21) in Form eines Generators oder Motors (37) vorgesehen ist, der so geschaltet ist, dass er in eine elektronische Widerstandsschaltung (34), die mit den Anschlüssen des Dämpfers (32) verbunden ist, Strom einspeist, um eine elektromotorische Kraft proportional zur Drehgeschwindigkeit des Gelenks (35), die der Dämpfer (32) empfängt, zu erzeugen.

14. Hybridhelikopter (1) nach einem der Ansprüche 9 bis 13,
**dadurch gekennzeichnet, dass** die manuelle Flugsteuervornchtung (21) funktionell mit einem Geschwindigkeitssensor (38) gekoppelt ist, der ein Signal erzeugen kann, das die Geschwindigkeit der Betätigung der Vorrichtung proportional zu der augenblicklichen Geschwindigkeit, mit der die manuelle Flugsteuervorrichtung (21) betätigt wird, wiedergibt, wobei das Geschwindigkeitssignal als Parameter einer vorbestimmten Dämpfungsgesetzmäßigkeit integriert wird.

15. Hybridhelikopter (1) nach Anspruch 14,
**dadurch gekennzeichnet, dass** das Rückkopplungssystem mindestens einen Positionssensor (36) des manuellen Steuerorgans (20), einen Betätigungsdämpfer (32) der manuellen Flugsteuervorrichtung (21) und einen Geschwindigkeitssensor (38) aufweist, die funktionell miteinander verbunden sind, um die Dämpfung direkt in Abhängigkeit von der vorbestimmten Dämpfungsgesetzmäßigkeit (A) zu definieren.

16. Hybridhelikopter (1) nach einem der Ansprüche 9 bis 15,
**dadurch gekennzeichnet, dass** das System einen Rechner (62) aufweist, an den mindestens ein Positionssensor (36) des Steuerorgans (20) und ein Dämpfer (32) der Betätigungen der manuellen Flugsteuervornchtung (21) und eventuell ein Geschwindigkeitssensor (38) des Steuerorgans (20) angeschlossen sind.

17. Hybridhelikopter (1) nach einem der Ansprüche 9 bis 16,
**dadurch gekennzeichnet, dass** dieser Hybridhelikopter (1) in der Lage ist, das haptische Rückkopplungsverfahren nach einem der Ansprüche 1 bis 8 auszuführen, und **dadurch**, dass er eine Drohne ist, deren Steuerpult (3) außerbords angeordnet ist, wobei die Drohne mindestens eine manuelle Flugsteuerungsvorrichtung mit haptischer Rückkoppelung und ein manuelles Schubsteuerorgan (20) aufweist, dessen aktuelle Lage durch die Kraftgesetzmäßigkeit (L) berücksichtigt wird.
